# EUROPEAN PATENT APPLICATION

(11) **EP 4 831 781 A1**
(43) Date of publication of application: **28.10.2026**
(21) Application number: 24907041.8
(22) Date of filing: 20.11.2024
(51) Int. Cl.: G06F 3/0484, B60K 35/22, B60K 35/80, B60R 16/02, E02F 9/26

(54) **DISPLAY CONTROL DEVICE, WORK MACHINE, PROGRAM, AND RECORDING MEDIUM FOR PROGRAM**

(30) Priority: 19.12.2023 JP 2023214093; 19.12.2023 JP 2023214092; 19.12.2023 JP 2023214094; 19.12.2023 JP 2023214095; 19.12.2023 JP 2023214096
(71) Applicant: KUBOTA CORPORATION, Osaka-shi, Osaka 530-0011 (JP)
(72) Inventor: BITO Kunihiko, Sakai-shi, Osaka 590-0908 (JP); TAKEUCHI Kunikazu, Sakai-shi, Osaka 590-0908 (JP)
(74) Representative: Müller-Boré & Partner Patentanwälte PartG mbB
(86) International application number: PCT/JP2024/041075
(87) International publication number: WO 2025/134653

(57) **Abstract**

Operation property of a display (60B) of a working machine (1) is improved. A display control apparatus (72B) is a display control apparatus (72B) including a display controller (72B1) configured or programmed to control a display operation on a display (60B) provided in or on a working machine (1). The display controller (72B1) is configured or programmed to, when a selection operation to select a to-be-operated application from among a plurality of applications has not been performed, cause a first operation portion (121) for the selection operation to be displayed as a first display state (S1) on a display screen (61B) of the display (60B), and, when the selection operation has been performed, cause a second operation portion (122) to operate the selected application and the first operation portion (121) to be displayed as a second display state (S2) on the display screen (61B).

## Description

### Technical Field

The present invention relates to display control apparatuses to perform display control of a display provided in or on a working machine, working machines including a display control apparatus, programs to cause a display control apparatus to operate, and a storage medium thereof.

### Background Art

Hitherto, display control apparatuses for working machines are known in which, when a predetermined menu display operation is performed, a menu image including multiple items for settings of the working machine is displayed on a display screen, and a desired item can be selected from among these items (see PTL 1).

### Citation List

### Patent Literature

PTL 1: Japanese Unexamined Patent Application Publication No. 2020-104810

### Summary of Invention

### Technical Problem

However, with the technology of PTL 1, when it is desired to transition from a state in which a certain item has been selected and an operation for that item is being performed to another item, it is necessary to first perform an operation to return to a menu screen in which multiple items are displayed to be selectable, and then perform an operation to select the other item, which involves time and effort. That is, a menu structure is generally configured as a tree-like hierarchical structure, and when a certain item is selected and operations for that item are performed, the display sequentially transitions to lower hierarchical levels of that item. Therefore, when it is desired to transition from a state in which a lower hierarchical level of a certain item is displayed to another item, it is necessary to return to a menu screen (home screen) at the top level of the hierarchical structure in which multiple items are displayed to be selectable, and then perform an operation to select the other item.

To solve such a problem of the related art, it is an object of the present invention to improve the operability of a display of a working machine.

### Solution to Problem

A display control apparatus according to an example embodiment of the present invention is a display control apparatus including a display controller configured or programmed to control a display operation on a display provided in or on a working machine, wherein the display controller is configured or programmed to, when a selection operation to select a to-be-operated application from among a plurality of applications has not been performed, cause a first operation portion for the selection operation to be displayed as a first display state on a display screen of the display, and, when the selection operation has been performed, cause a second operation portion to operate the selected application and the first operation portion to be displayed as a second display state on the display screen.

The display controller may be configured or programmed to cause the first operation portion for a selection operation to select an application other than an application corresponding to the second operation portion among the plurality of applications to be displayed in the second display state.

The display controller may be configured or programmed to cause, in addition to the first operation portion and the second operation portion, a third operation portion to operate an application different from the application corresponding to the second operation portion to be displayed in the second display state.

The display controller may be configured or programmed to cause a plurality of function operation members to respectively operate a plurality of functions of the selected application to be displayed as the second operation portion.

The display controller may be configured or programmed to, when the display controller causes a plurality of function operation members to respectively operate a plurality of functions of the selected application to be displayed on the second operation portion and causes an operation portion to operate the application to be displayed as the third operation portion, cause the operation portion to operate the application to be displayed to enable operation of same functions as in a case where the operation portion to operate the application is displayed as the second operation portion.

The display controller may be configured or programmed to cause a fourth operation portion to be displayed on the display screen in the second display state, the fourth operation portion being configured to receive an operation to transition to the first display state, and when the fourth operation portion is operated, cause the display screen to transition from the second display state to the first display state.

A working machine according to an example embodiment of the present invention includes the display control apparatus, and a display to be controlled as to a display operation by the display control apparatus.

A program according to an example embodiment of the present invention is a program to cause a computer to execute processing of the display controller of the display control apparatus.

A storage medium according to an example embodiment of the present invention is a storage medium storing the program in a computer-readable manner.

### Advantageous Effects of Invention

According to the above-described display control apparatus, the first operation portion for performing a selection operation to select an application is displayed on the display both when a selection operation to select a to-be-operated application has not been performed and when such a selection operation has been performed. Accordingly, a selection operation to select an application can be easily performed regardless of the display state at that time, and the operability of the display of the working machine can be improved.

### Brief Description of Drawings

[FIG. 1] FIG. 1 is a schematic side view illustrating the overall configuration of a working machine.
[FIG. 2] FIG. 2 is a control block diagram of the working machine according to a first example embodiment.
[FIG. 3] FIG. 3 is a diagram illustrating a hydraulic system of the working machine.
[FIG. 4] FIG. 4 is a schematic side view of a protective structure (cabin).
[FIG. 5] FIG. 5 is a diagram illustrating an example of a display screen according to the first example embodiment.
[FIG. 6] FIG. 6 is a diagram illustrating another example of the display screen according to the first example embodiment.
[FIG. 7] FIG. 7 is a diagram illustrating another example of the display screen according to the first example embodiment.
[FIG. 8] FIG. 8 is a diagram illustrating another example of the display screen according to the first example embodiment.
[FIG. 9] FIG. 9 is a state transition diagram of the display screen.
[FIG. 10A] FIG. 10A is a diagram illustrating a display region of the display screen according to the first example embodiment.
[FIG. 10B] FIG. 10B is a diagram illustrating a display region of the display screen according to a second example embodiment.
[FIG. 11A] FIG. 11A is a diagram illustrating an example of the display screen in a second display state according to the first example embodiment.
[FIG. 11B] FIG. 11B is a diagram illustrating an example of the display screen in a first display state according to the first example embodiment.
[FIG. 11C] FIG. 11C is a diagram illustrating another example of the display screen in the first display state according to the first example embodiment.
[FIG. 11D] FIG. 11D is a diagram illustrating another example of the display screen in the first display state according to the first example embodiment.
[FIG. 12A] FIG. 12A is a diagram illustrating the relationship between a display state and the operation content of an operation actuator.
[FIG. 12B] FIG. 12B is a diagram illustrating an example of a vibration mode of a vibration element.
[FIG. 12C] FIG. 12C is a diagram illustrating another example of the vibration mode of the vibration element.
[FIG. 12D] FIG. 12D is a diagram illustrating another example of the vibration mode of the vibration element.
[FIG. 12E] FIG. 12E is a diagram illustrating another example of the vibration mode of the vibration element.
[FIG. 13] FIG. 13 is a control block diagram of the working machine according to the second example embodiment.
[FIG. 14A] FIG. 14A is a diagram illustrating an example of the display screen in the second display state according to the second example embodiment.
[FIG. 14B] FIG. 14B is a diagram illustrating an example of the display screen in the first display state according to the second example embodiment.
[FIG. 14C] FIG. 14C is a diagram illustrating another example of the display screen in the first display state according to the second example embodiment.
[FIG. 14D] FIG. 14D is a diagram illustrating another example of the display screen according to the second example embodiment.

### Description of Embodiments

Hereinafter, an example embodiment of the present invention will be described with reference to the drawings.

### [First Example Embodiment]

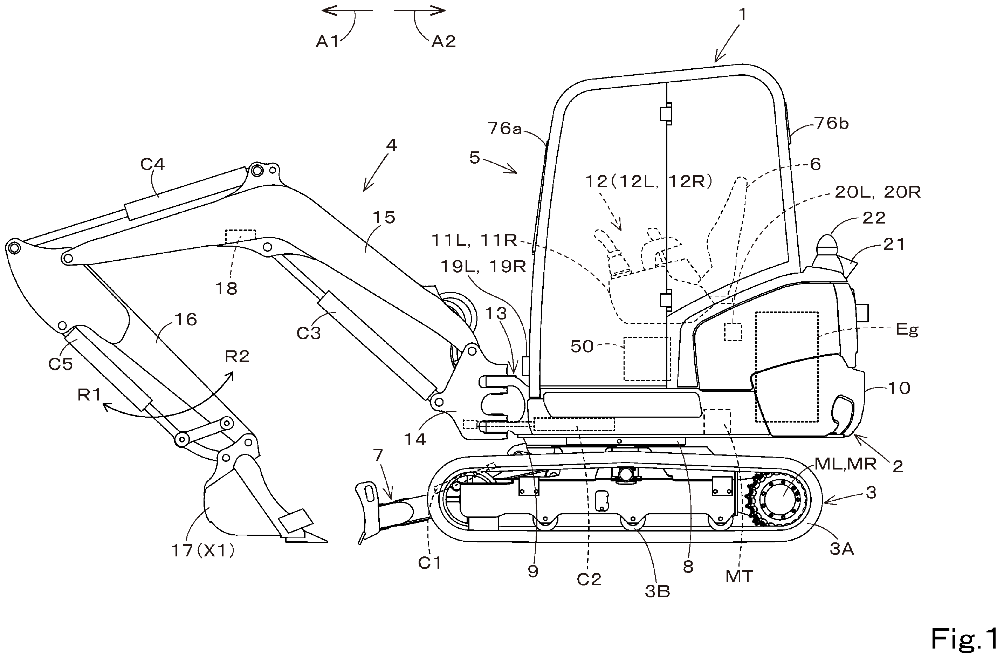

FIG. 1 is a schematic side view illustrating the overall configuration of a working machine 1 according to the present example embodiment. In the present example embodiment, a backhoe, which is a slewing working machine, is illustrated as an example of the working machine 1. As illustrated in FIG. 1, the working machine 1 includes a machine body (slewing base) 2, a traveling device 3, and a working device 4. A protective structure (for example, a cabin, a canopy, or the like) 5 is mounted on the machine body 2. An operator's seat 6 is provided inside the cabin 5.

In the present example embodiment, with respect to an operator (driver) U1 seated in the operator's seat 6 of the working machine 1, the direction forward of the operator U1 (direction of arrow A1 in FIG. 1) is defined as forward, the direction rearward of the operator U1 (direction of arrow A2 in FIG. 1) is defined as rearward, the direction to the left of the operator U1 (the near direction in FIG. 1) is defined as left, and the direction to the right of the operator U1 (the far direction in FIG. 1) is defined as right. Further, a horizontal direction which is a direction orthogonal to the front-rear direction is defined as a width direction.

The machine body 2 is supported on the traveling device 3 via a slewing bearing 8 so as to be capable of slewing about a vertical axis (an axis extending in the up-down direction). The machine body 2 is driven to slew by a slewing motor MT including a hydraulic pressure motor (hydraulic actuator). The machine body 2 includes a slewing platform 9 that slews about the vertical axis, and a weight 10. A prime mover Eg is mounted on the slewing platform 9. The prime mover Eg is, for example, an engine (such as a diesel engine), an electric motor driven by a battery provided in the working machine 1, or the like. In the present example embodiment, the prime mover Eg is a diesel engine.

The traveling device 3 is a traveling device of a crawler type, a wheel type, or the like that supports the machine body 2 so as to be movable, and includes a traveling frame (track frame) 3A that supports the machine body 2, and a traveling mechanism 3B driven by traveling motors (a first traveling motor ML and a second traveling motor MR).

A dozer device 7, which is an example of the working device 4, is attached at the front of the traveling device 3.

The machine body 2 includes a support bracket 13 that supports a swing bracket 14 so as to be swingable about the vertical axis. The working device 4 is attached to the swing bracket 14. The working device 4 includes a boom 15, an arm 16, and an attachment 17. A base portion of the boom 15 is pivotally attached to the swing bracket 14 so as to be swingable about the horizontal axis (the axis extending in the width direction). The arm 16 is pivotally attached to a distal end portion of the boom 15 so as to be rotatable about the horizontal axis in an arm dump direction (direction of arrow R1 in FIG. 1) and an arm crowd direction (direction of arrow R2 in FIG. 1). The attachment 17 is provided on a distal end portion of the arm 16.

In FIG. 1, a bucket X1 is provided as an example of the attachment 17. Note that the attachment 17 may be other attachments 17 that can be driven by a hydraulic actuator, besides the bucket X1. Examples of other attachments 17 include a tilt bucket, a breaker, a clamshell, an auger, a grapple, a rotary grapple, a brush cutter, a thumb, and the like.

The dozer device 7 is configured to be movable up and down by extension and retraction of a dozer cylinder C1. The swing bracket 14 is configured to be swingable by extension and retraction of a swing cylinder C2, and the boom 15 is configured to be swingable by extension and retraction of a boom cylinder C3. The arm 16 is configured to be swingable by extension and retraction of an arm cylinder C4, and the attachment 17 is configured to be swingable by extension and retraction of an attachment cylinder C5. These cylinders C1 to C5 include, for example, hydraulic cylinders (hydraulic actuators).

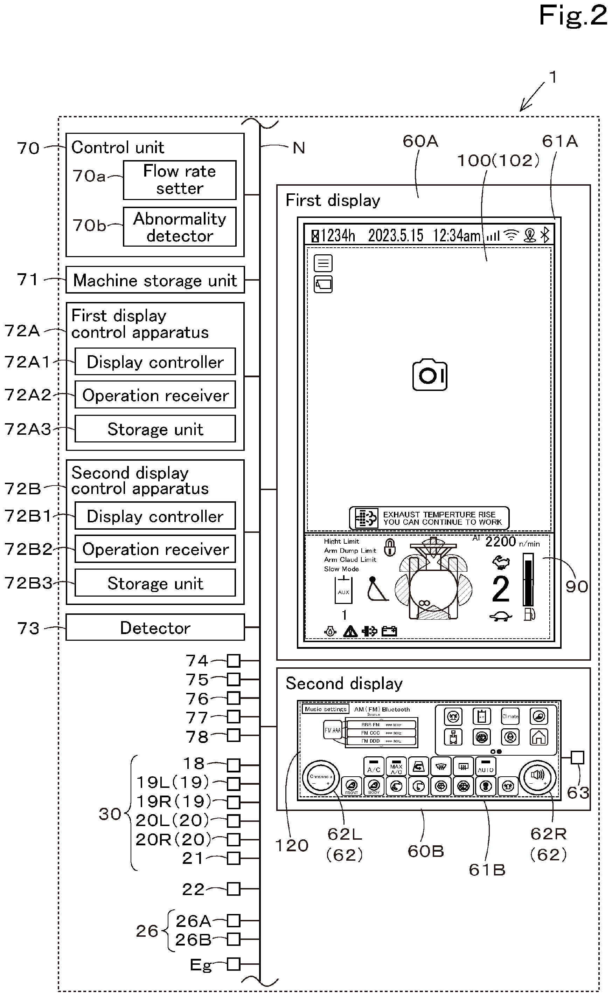

FIG. 2 is a schematic diagram of a control block of the working machine 1. As illustrated in FIG. 2, the working machine 1 includes a control unit 70 and a machine storage unit 71. The control unit 70 performs various types of control for the working machine 1. The control unit 70 may be realized by hardware provided on an integrated circuit (IC chip) or the like, or may be realized by software using a computer. In the latter case, the computer includes a storage medium in which a program which is software for realizing respective functions of the control unit 70 and various data relating to the working machine 1 are stored in a computer-readable manner, an arithmetic circuit such as a CPU (Central Processing Unit) that executes instructions of the program, a RAM (Random Access Memory) in which the program and various data are loaded, and the like. The functions of the control unit 70 are realized by the arithmetic circuit reading and executing the program from the storage medium. The control unit 70 is connected to other devices mounted on the working machine 1 (for example, the prime mover Eg, a manipulator 12, and the like) via an in-vehicle communication network N such as a communication cable, a CAN (Controller Area Network), FlexRay, or the like.

The machine storage unit 71 includes a non-volatile memory or the like. The machine storage unit 71 stores various types of information relating to the working machine 1. The machine storage unit 71 stores an operating system and various application software programs.

The working machine 1 has multiple operation modes, and the control unit 70 is capable of performing control based on the multiple operation modes. For example, the machine storage unit 71 stores a conversion table that associates operation modes with control signals corresponding to the operation modes. The control unit 70 refers to the machine storage unit 71 according to predetermined conditions and performs control based on the corresponding operation mode. In the present example embodiment, the working machine 1 has, as operation modes, an auto-idle function, a crane mode function, and a slow mode function.

The auto-idle function is a function that sets the rotational speed of the prime mover Eg to a predetermined rotational speed (idling rotational speed) when the manipulator 12 has not been operated for a predetermined period of time or longer while the prime mover Eg is operating. The crane mode function is a function that switches the rotational speed of the prime mover Eg and the rotational speed of the slewing motor MT to predetermined rotational speeds (crane mode rotational speeds) suitable for lifting work when lifting work is performed using a hook provided on the attachment 17. The slow mode function is a function that switches the operating speed of the working device 4 to a predetermined speed. Note that the operation modes of the working machine 1 are not limited to the above-described modes and may be added or changed as appropriate.

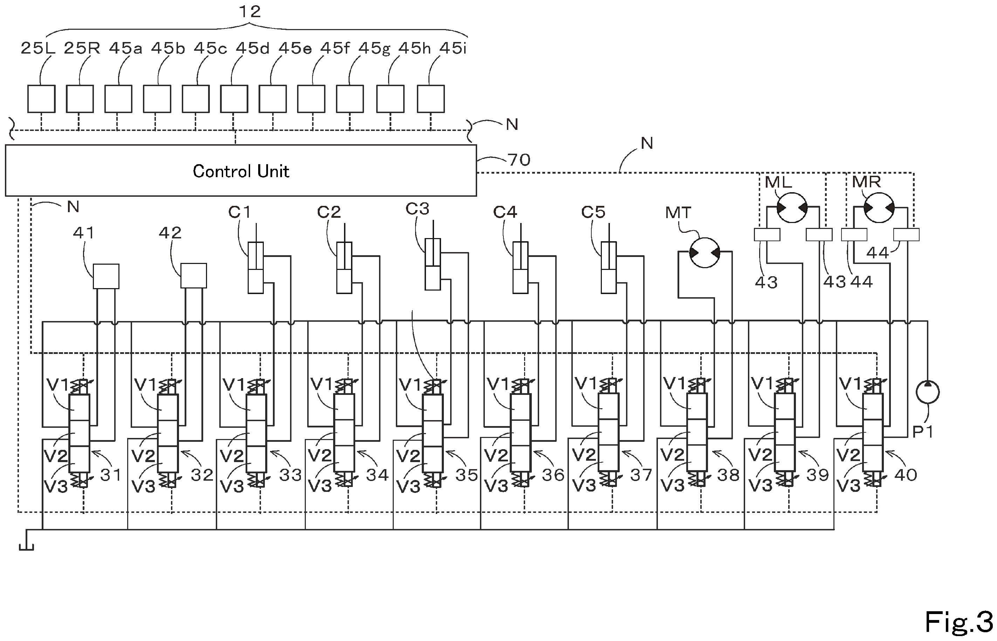

FIG. 3 is a diagram illustrating a hydraulic system of the working machine 1. The hydraulic system of the working machine 1 includes service ports 41 and 42 to which various hydraulic actuators can be connected, the above-described hydraulic actuators C1 to C5, MT, ML, and MR, control valves 31 to 40 that control hydraulic fluid supplied to these actuators, and adjustment valves 43 and 44 that adjust (change) the flow rate of hydraulic fluid supplied to the traveling motors ML and MR.

The control valves 31 to 40 are each connected to a hydraulic pump P1 via a fluid passage. The control valves 31 to 40 are also respectively connected to the service ports 41 and 42 and the hydraulic actuators C1 to C5, MT, ML, and MR via fluid passages.

The control valves 31 to 40 are, for example, electromagnetic three-position switching valves. More specifically, the control valves 31 to 40 are, for example, direct-acting spool-type switching valves. The control valves 31 to 40 are switched among first to third positions V1 to V3 by switching between energization and de-energization of respective solenoids. As a result, the control valves 31 to 40 control the direction, flow rate, and the like of the hydraulic fluid supplied to the respectively-connected hydraulic actuators.

The adjustment valve 43 is provided in a fluid passage connecting the first traveling motor ML and the control valve 39, and adjusts the flow rate of hydraulic fluid supplied from the control valve 39 to the first traveling motor ML. The adjustment valve 44 is provided in a fluid passage connecting the second traveling motor MR and the control valve 40, and adjusts the flow rate of hydraulic fluid supplied from the control valve 40 to the second traveling motor MR.

The control unit 70 controls the control valves 31 to 40 and the adjustment valves 43 and 44 in accordance with operation of the manipulator 12. As illustrated in FIG. 1, the manipulator 12 is provided, for example, on manipulator bases 11L and 11R arranged on both sides in the width direction of the operator's seat 6, and as illustrated in FIG. 3, includes operation members 25L, 25R, and 45a to 45i. The operation members 25L and 25R are, for example, slide switches such as slide potentiometers, and are variable resistors capable of detecting a movement amount (operation amount). The operation members 25L and 25R input signals indicating an operation amount and an operation direction to the control unit 70 in accordance with operation by the operator U1.

The operation members 25L and 25R include the first operation member 25L provided on a manipulator 12L of the manipulator base 11L and the second operation member 25R provided on a manipulator 12R of the manipulator base 11R. The first operation member 25L can be operated in a first operation direction (one direction) or a second operation direction (another direction), and the second operation member 25R can be operated in a third operation direction (one direction) or a fourth operation direction (another direction).

The operation members 45a to 45h include, for example, levers, slide switches, seesaw switches, dials, pedals, and the like. The operation members 45a to 45h each have a sensor that detects an operation direction and an operation amount, and the sensors of the operation members 45a to 45h input detection signals to the control unit 70 in accordance with operations on the corresponding operation members 45a to 45h.

The control unit 70 controls the corresponding control valves 31 to 40 based on signals from the operation members 25L and 25R and signals from the sensors of the operation members 45a to 45h. As a result, the flow rate and the like of the hydraulic fluid supplied from the control valves 31 to 40 to the respective hydraulic actuators are controlled.

The operation member 45i is an operation member capable of changing the traveling speed of the working machine 1 (traveling device 3) in multiple stages, separately from the operation members 45g and 45h. For example, the operation member 45i is a switch that can be set to multiple stages (for example, three stages). The machine storage unit 71 stores, in advance, a conversion table that associates stages (speed stages) settable via the operation member 45i with control signals to be input to the adjustment valves 43 and 44.

The sensor of the operation member 45i inputs a detection signal of the speed stage to the control unit 70 in accordance with an operation on the operation member 45i. The control unit 70 refers to the conversion table and controls the adjustment valves 43 and 44 based on the control signal corresponding to the speed stage. As a result, the flow rate of hydraulic fluid supplied to the first traveling motor ML and the second traveling motor MR is changed, thus enabling the traveling speed to be changed in multiple stages.

Note that, in the present example embodiment, the operation of solenoids provided in the respective control valves 31 to 40 is controlled based on signals from the operation members 25L and 25R or from the sensors of the operation members 45a to 45h; however, this does not imply any limitation. For example, using pilot-type control valves 31 to 40, pilot pressure supplied to the control valves 31 to 40 may be controlled by pilot valves interlocked with the operation members 45a to 45h or by solenoid valves provided in pilot fluid passages in accordance with operations on the operation members 45a to 45h. Alternatively, operations on the operation members 45a to 45h may be transmitted to the control valves 31 to 40 via a link mechanism or the like to control the control valves 31 to 40.

Further, as illustrated in FIG. 2, the control unit 70 may include a flow rate setter 70a that variably sets a maximum flow rate level (maximum value of the flow rate of hydraulic fluid) of hydraulic fluid supplied to and discharged from the attachment 17 via the control valves 31 and 32. The flow rate setter 70a is a program stored in a storage medium of the control unit 70 and variably sets the maximum flow rate level using, for example, a predetermined control map. For example, the flow rate setter 70a can set respective maximum flow rate levels (first to fourth supply flow rates) when the operation members 25L and 25R are operated in respective operation directions (first to fourth operation directions) by a predetermined stroke or more.

As illustrated in FIGS. 1 and 2, the working machine 1 includes multiple devices X. Examples of the multiple devices X include multiple imagers 26, a lighting apparatus 30, a rotary beacon 22, an air conditioner 74, an audio device 75, a wiper system 76, a defogger 77, and a locking device 78. The control unit 70 is communicably connected to these devices X via the in-vehicle communication network N, and controls these devices X using analog voltages, analog currents, or digital communication.

The imagers 26 are cameras or the like provided at multiple locations of the working machine 1, and are capable of capturing images of the surroundings (surrounding area) of the working machine 1. The imagers 26 include, for example, a first imager 26A that captures images forward of the working machine 1, and a second imager 26B that captures images rearward thereof. Imaging information obtained by the imagers 26 (information of captured images 102) is input to the control unit 70, and the control unit 70 stores the imaging information in the machine storage unit 71.

The lighting apparatus 30 includes, for example, a boom light 18, a headlight 19, a side light 20, and a rear light 21. The boom light 18 is provided on the boom 15 and illuminates a work area around the boom 15. The headlight 19 is a light that illuminates forward of the machine body 2, and includes, for example, a left headlight 19L and a right headlight 19R provided at the lower front of the operator's seat 6. The side light 20 is a light that illuminates the side of the machine body 2, and includes, for example, a left side light 20L and a right side light 20R relative to the operator's seat 6. The rear light 21 is a light that illuminates rearward of the machine body 2, and is provided, for example, at the rear of the cabin 5.

The rotary beacon 22 lights up and rotates when a predetermined condition is satisfied; for example, it lights up and rotates when the crane mode is selected as the operation mode of the working machine 1. Alternatively, the rotary beacon 22 may light up and rotate in response to a predetermined operation performed by the operator U1.

The air conditioner 74 is a device that performs air conditioning in the cabin 5. The air conditioner 74 includes an air conditioner body 50 provided in the chamber of the cabin 5, and a switching mechanism that switches between intake of outside air and intake of inside air (recirculated air). The air conditioner body 50 includes a blower, an evaporator, and the like, and circulates conditioned air through a first air supply duct 51A and a second air supply duct 51B in the cabin 5.

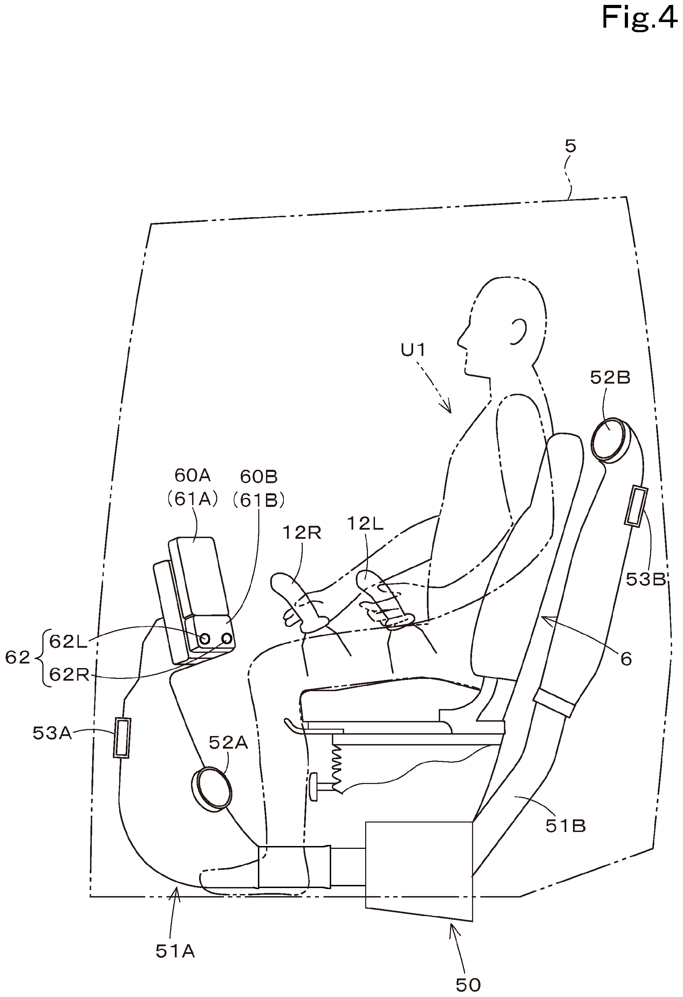

FIG. 4 is a schematic side view of the protective structure (cabin) 5. As illustrated in FIG. 4, the first air supply duct 51A includes a blowout portion 52A provided at a lower front portion inside the cabin 5 and configured to blow conditioned air toward the footwell of the operator's seat 6, and a blowout portion 53A provided at a front portion inside the cabin 5 and configured to blow conditioned air toward a front panel (front window) at the front of the cabin 5, the blowout portion 53A having a function as a defroster (FIG. 2: defogger 77).

As illustrated in FIG. 4, the second air supply duct 51B includes a blowout portion 52B provided at the rear of the operator's seat 6 and configured to blow conditioned air toward the back of the operator U1 seated in the operator's seat 6, and a blowout portion 53B configured to blow conditioned air toward a rear panel (rear window) at the rear of the cabin 5.

The first air supply duct 51A and the second air supply duct 51B are each provided with a partition plate and an actuator (for example, a servomotor), and the air conditioner 74 can switch between blowing (ON) and stopping (OFF) of conditioned air from each of the blowout portions 52A to 53B by changing the position of the partition plate by the actuator.

Note that, in the present example embodiment, the air conditioner 74 also serves as the defogger 77 configured to remove fog from the front panel; however, the air conditioner 74 may also serve as the defogger 77 configured to remove fog from the front panel and/or the rear panel, or the defogger 77 may be provided separately from the air conditioner 74.

The audio device 75 is, for example, an audio unit having a radio unit. The audio device 75 switches the frequency of radio waves received from a radio antenna, and converts radio wave information received from the radio antenna into an electrical signal corresponding to sound. The audio device 75 may also refer to music information stored in an internal memory of the audio device 75 and convert the music information into an electrical signal corresponding to sound. The audio device 75 outputs the electrical signal to a speaker provided around the operator's seat 6, and the speaker converts the electrical signal into physical vibration (sound) to output sound or music.

The wiper system 76 is a device that activates a front wiper 76a and/or a rear wiper 76b. As illustrated in FIG. 1, the front wiper 76a is provided on the front panel of the cabin 5, and the rear wiper 76b is provided on the rear panel of the cabin 5. The front wiper 76a and the rear wiper 76b are each driven by an actuator (electric motor), and can switch between activation (ON) and deactivation (OFF) of a wiping function.

The locking device 78 is a device that switches between locking and unlocking of the cabin 5. The locking device 78 includes, for example, a lock mechanism provided on a door of the cabin 5, and an actuator (electric motor) that drives the lock mechanism.

As illustrated in FIG. 2, the working machine 1 further includes a detector 73 that acquires various types of information on devices provided in or on the working machine 1, including the devices X described above. The detector 73 includes, for example, sensors that detect information such as the rotational speed of the prime mover Eg, the temperature of cooling water (water temperature), the remaining amount of fuel, the state of charge of a battery, the state of the working device 4 (for example, the current positions and orientations of the boom 15, the arm 16, and the attachment 17), the speed stage, the temperature of hydraulic fluid, and the like. The detector 73 inputs the information to the control unit 70, and the control unit 70 performs predetermined processing on the input information and outputs the processed information to display control apparatuses 72A and 72B. Note that the configuration of each detector is not limited to the above-described configuration, and various detecting means known in the art may be used.

Further, as illustrated in FIG. 2, the control unit 70 includes an abnormality detector 70b that detects preset warning conditions. The abnormality detector 70b detects, for example, an abnormality (failure) of the devices X mounted on the working machine 1 as a warning condition. The abnormality detector 70b is a program stored in the storage medium of the control unit 70.

The abnormality detector 70b determines that a warning condition (warning event) has occurred in the working machine 1 when a predetermined warning condition is satisfied, such as when a value output from electronic components of the devices X, the detector 73, or the like exceeds a predetermined threshold range. For example, the abnormality detector 70b detects, as a warning condition, abnormalities such as disconnection and short-circuiting of sensors and switches, and an abnormality (overheating) of the prime mover Eg when the water temperature exceeds a predetermined range. The warning condition detected by the abnormality detector 70b is input to the control unit 70.

As illustrated in FIGS. 2, 4, and the like, the working machine 1 includes displays 60A and 60B, an operation actuator 62, the first display control apparatus 72A, and the second display control apparatus 72B. The displays 60A and 60B are capable of providing various displays for the working machine 1 and performing various settings for the working machine 1. The displays 60A and 60B include the first display 60A and the second display 60B, which are at positions visible to the operator U1 seated in the operator's seat 6 in the chamber of the cabin 5 and are arranged in the vicinity of the manipulator 12.

As illustrated in FIG. 2, the first display 60A has a first display screen 61A, and the second display 60B has a second display screen 61B. The first display screen 61A and the second display screen 61B are rectangular touchscreens having a function for receiving touch operation inputs (e.g., tapping operations, swipe operations, etc.) on the screens. Accordingly, the operator U1 can visually recognize the displays 60A and 60B while seated in the operator's seat 6 with hands placed on the manipulator 12, and can operate the displays 60A and 60B by extending the hands placed on the manipulator 12 forward. Note that, in the following description, operations on screens of the first display screen 61A and the second display screen 61B will be described by taking a tapping operation as an example.

As illustrated in FIG. 4 and the like, the second display 60B is located below the first display 60A. The dimension in the vertical direction of the first display 60A is greater than the dimension in the vertical direction of the second display 60B. The first display 60A has a vertically-elongated rectangular shape, and the second display 60B has a laterally-elongated rectangular shape. The area of the first display 60A is larger than the area of the second display 60B. Additionally, in the present example embodiment, the dimensions of adjacent sides of the first display 60A and the second display 60B are substantially equal (within ±5%).

The operation actuator 62 is a member to perform work-related operations. The operation actuator 62 is provided on the second display screen 61B so as to protrude from the second display screen 61B. For example, the operation actuator 62 is a dial-type operation member rotatable in a circumferential direction about an axis extending in a direction orthogonal to the second display screen 61B. The operation actuator 62 is a cylindrical dial having a through-hole in its central portion. Accordingly, the operator U1 can visually recognize the display within the cylinder of the operation actuator 62 on the second display screen 61B.

Note that it is sufficient for display inside the operation actuator 62 on the second display screen 61B to be visually recognizable, and a transparent member may be provided in the through-hole of the operation actuator 62.

Additionally, the operation actuator 62 may be any physical operation member provided at least on the second display screen 61B, and may be a dial-type operation member that rotates about an axis extending in a horizontal direction relative to the second display screen 61B, or may be a slide-type operation member provided on the second display screen 61B.

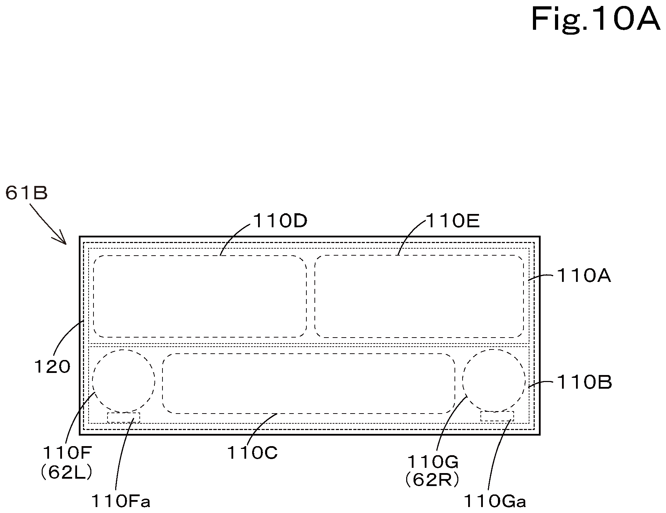

As illustrated in FIG. 4 and the like, in the present example embodiment, multiple operation actuators 62 (62L, 62R) are provided on the second display screen 61B. As illustrated in FIG. 10A, the operation actuators 62 are arranged in a second lower region 110B at a lower portion of the second display screen 61B. Further, the operation actuators 62 are provided as a pair on the second display screen 61B, and the paired operation actuators 62 are spaced apart from each other on one side and the other side in a width direction of the second lower region 110B. The left operation actuator 62L is provided in a region 110F, and the right operation actuator 62R is provided in a region 110G. Note that it is sufficient for the number of operation actuators 62 provided on the second display screen 61B to be plural, and is not limited to the above-described number (a pair).

The first display control apparatus 72A is a device that controls display of (display operation on) the first display 60A. The second display control apparatus 72B is a device that controls display of the second display 60B. The first display control apparatus 72A and the second display control apparatus 72B are realized by hardware and/or software, similarly to the control unit 70.

The first display control apparatus 72A and the second display control apparatus 72B may be provided in common housings with or in separate housings from the first display 60A and the second display 60B, respectively. Note that the first display control apparatus 72A and the second display control apparatus 72B may be part of the control unit 70, or may be provided separately from the control unit 70 and configured to exchange various types of information with the control unit 70.

As illustrated in FIG. 2, the first display control apparatus 72A includes a display controller (controller, first display controller) 72A1, an operation receiver (event handler) 72A2, and a storage unit 72A3.

The controller 72A1 performs various controls relating to the first display 60A, and mainly controls display of information relating to the working machine 1 on the first display 60A. The control unit 70 inputs information stored in the machine storage unit 71 as well as information acquired from the detector 73, the abnormality detector 70b, and the imagers 26 to the controller 72A1. The controller 72A1 causes the information acquired from the control unit 70 to be displayed on the first display screen 61A of the first display 60A.

The event handler 72A2 detects operations performed by the operator U1 on the first display 60A, inputs instruction signals for performing actions relating to the working machine 1 to the control unit 70, and inputs instruction signals for control of the first display 60A to the controller 72A1. The control unit 70 controls various operations relating to the working machine 1 based on the instruction signals input by the event handler 72A2.

The storage unit 72A3 stores various types of information relating to the first display 60A.

As illustrated in FIG. 2, the second display control apparatus 72B includes a display controller (controller, second display controller) 72B1, an operation receiver (event handler) 72B2, and a storage unit 72B3.

The controller 72B1 performs various controls relating to the second display 60B, and mainly causes an operation portion 120 (i.e., one for performing operation input) for receiving operations for the devices X provided in or on the working machine 1 to be displayed on the second display 60B. The operation portion 120 is an electronic interface. That is, the working machine 1 of the present example embodiment can be said to include an operation device (second display device) 60B including the operation portion 120 and the operation actuators 62.

As illustrated in FIG. 10A, the operation portion 120 is provided in a second upper region 110A at an upper portion of the second display screen 61B. The operation portion 120 is also provided in a third display region 110C between the pair of operation actuators 62 within the second lower region 110B, in addition to the second upper region 110A. That is, the controller 72B1 causes the operation portion 120 to be displayed in the second upper region 110A of the second display screen 61B and in the region 110C between the pair of operation actuators 62 within the second lower region 110B, which are regions different from the regions where the operation actuators 62 are provided.

The event handler 72B2 detects operations performed by the operator U1 on the second display 60B, inputs instruction signals mainly for operating the devices of the working machine 1 to the control unit 70, and inputs instruction signals for control of the second display 60B to the controller 72B1. The event handler 72B2 can detect the operation amount, rotation direction, and operation speed of each of the operation actuators 62, as well as an operation on the operation portion 120. The control unit 70 controls various operations relating to the working machine 1 based on the instruction signals input by the event handler 72B2.

The storage unit 72B3 stores various types of information relating to the second display 60B.

Hereinafter, specific examples in which the control unit 70 activates the devices X based on instruction signals input by the event handler 72B2 will be described. For example, when the operator U1 operates the operation portion 120 for the air conditioner 74 displayed on the second display screen 61B, the event handler 72B2 detects the operation and inputs an instruction signal for activation of the air conditioner 74 to the control unit 70. Based on the instruction signal, the control unit 70 performs control to activate the air conditioner 74 (for example, switching between blowing (ON) and stopping (OFF) of conditioned air from the blowout portions 52A and 52B).

Further, when the operator U1 operates the operation portion 120 for the audio device 75 displayed on the second display screen 61B, the event handler 72B2 detects the operation and inputs an instruction signal for activation of the audio device 75 to the control unit 70. Based on the instruction signal, the control unit 70 performs control to activate the audio device 75 (for example, conversion of radio wave information and music information into electrical signals, and output to the speaker).

Moreover, when the operator U1 operates the operation portion 120 for the wiper system 76 displayed on the second display screen 61B, the event handler 72B2 detects the operation and inputs an instruction signal for activation of the wiper system 76 to the control unit 70. Based on the instruction signal, the control unit 70 performs control to activate the wiper system 76 (for example, switching between activation (ON) and deactivation (OFF) of wiping of water droplets).

Additionally, when the operator U1 operates the operation portion 120 for the defogger 77 displayed on the second display screen 61B, the event handler 72B2 detects the operation and inputs an instruction signal for activation of the defogger 77 to the control unit 70. Based on the instruction signal, the control unit 70 performs control to activate the defogger 77 (air conditioner 74) (for example, switching between blowing (ON) and stopping (OFF) of conditioned air from the blowout portions 53A and 53B).

Further, when the operator U1 operates the operation portion 120 for the locking device 78 displayed on the second display screen 61B, the event handler 72B2 detects the operation and inputs an instruction signal for activation of the locking device 78 to the control unit 70. Additionally, when the operator U1 operates supplementary information 92 indicating an activation status regarding the locking device 78 displayed on the display screen 61A (first display screen 61A), the event handler 72A2 detects the operation and inputs an instruction signal for activation of the locking device 78 to the control unit 70. Based on these instruction signals, the control unit 70 performs control to activate the locking device 78 (for example, locking and unlocking).

Moreover, when the operator U1 operates the operation portion 120 for the lighting apparatus 30 displayed on the second display screen 61B, the event handler 72B2 detects the operation and inputs an instruction signal for activation of the lighting apparatus 30 to the control unit 70. Based on the instruction signal, the control unit 70 performs control to activate the lighting apparatus 30 (for example, turning on and off).

In addition, when the operator U1 operates the operation portion 120 for the crane mode displayed on the second display screen 61B, the event handler 72B2 detects the operation and inputs an instruction signal for activation of the crane mode to the control unit 70. Based on the instruction signal, the control unit 70 performs control to change the prime mover Eg or the like to a predetermined rotational speed, and to activate (turn on or off) the rotary beacon 22.

Note that, in the above-described examples, cases have been described in which the control unit 70 activates the devices X based on instruction signals from the event handler 72B2; however, the control unit 70 may activate the devices X based on instruction signals from the event handler 72A2. Specifically, the event handler 72A2 detects an operation on the supplementary information 92 described later, and the control unit 70 activates the devices X based on instruction signals from the event handler 72A2.

Further, the activation states (activation statuses) of the respective devices X are displayed on the displays 60A and 60B. In such a case, the control unit 70 detects the activation states of the respective devices X and inputs the detected states as current activation states to the controllers 72A1 and 72B1. The controllers 72A1 and 72B1 cause the activation states to be displayed on the displays 60A and 60B.

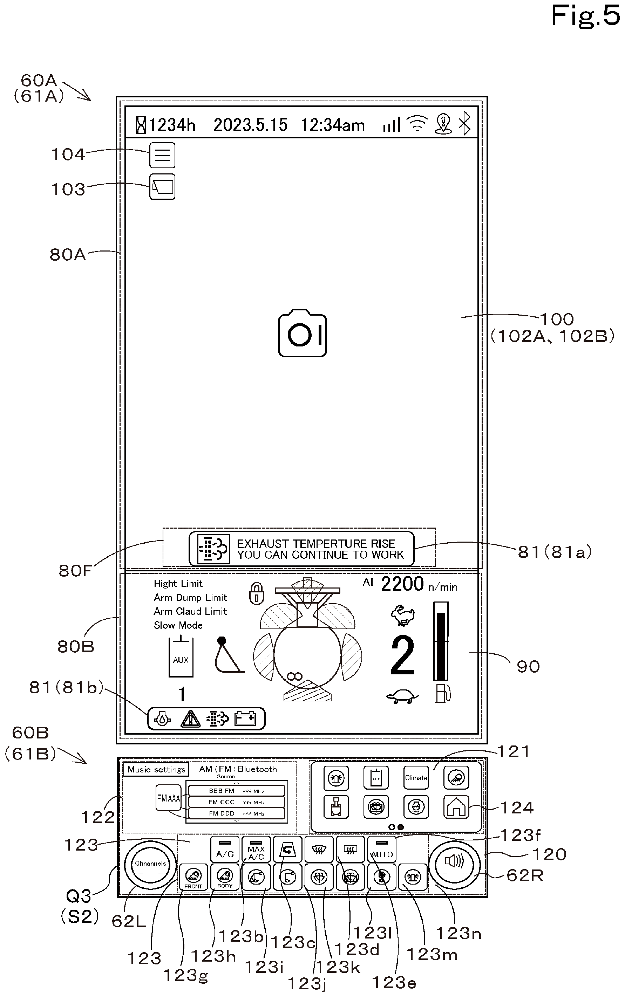

Hereinafter, screens displayed by the first display control apparatus 72A (controller 72A1) on the first display screen 61A of the first display 60A will be described using FIGS. 5 to 8.

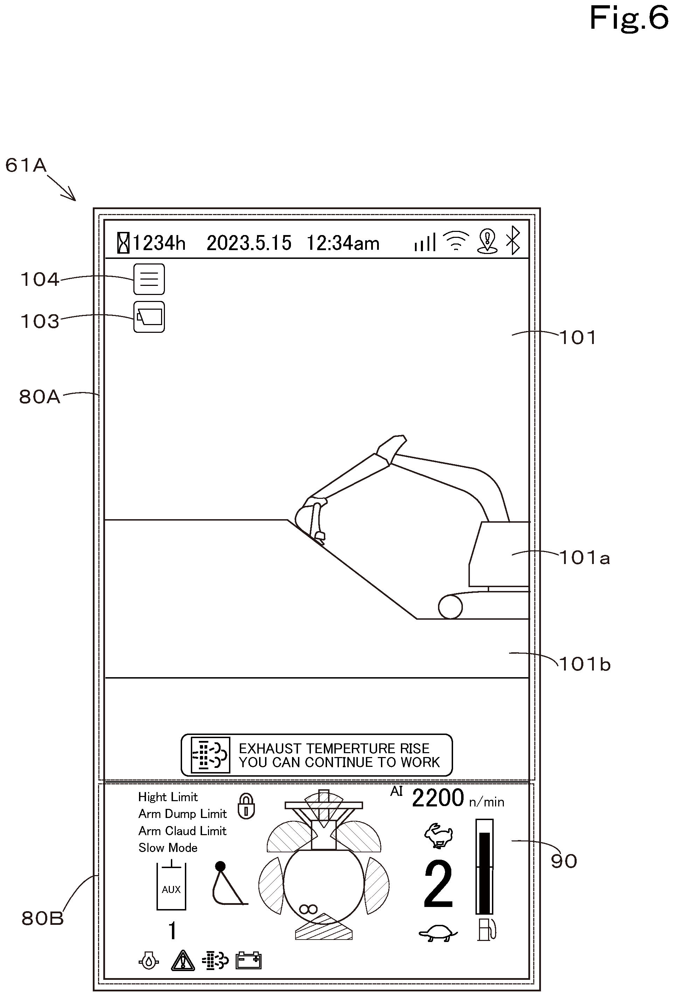

As illustrated in FIGS. 5 and 6, the controller 72A1 causes information relating to the working machine 1 to be displayed on the first display screen (display screen) 61A of the first display 60A. The controller 72A1 causes different types of information to be concurrently displayed in a first upper region (upper region) 80A at an upper portion of the first display screen 61A and in a first lower region (lower region) 80B at a lower portion thereof. The upper region 80a is larger than the lower region 80b.

As information relating to the working machine 1, the controller 72A1 causes environmental information 100 (FIG. 5) indicating the surrounding environment of the working machine 1 and/or guidance information 101 (FIG. 6) for the working machine 1 to be displayed in the first upper region 80A, and causes state information 90 indicating the state of the working machine 1 to be displayed in the first lower region 80B. In the present example embodiment, the environmental information 100 includes multiple captured images 102 acquired by the multiple imagers 26A and 26B provided on the working machine 1, which are displayed on the first display 60A. The guidance information 101 for the working machine 1 is information to assist the operator U1 in manipulating the working machine 1.

The controller 72A1 causes a first switching operation portion 103 and a second switching operation portion 104 to be displayed at an upper portion of the upper region 80A. The first switching operation portion 103 receives an operation for switching the display among the multiple captured images 102 acquired by the multiple imagers 26A and 26B. When the first switching operation portion 103 is operated, the event handler 72A2 receives the operation to switch the display of the captured images 102.

The second switching operation portion 104 receives an operation for switching between the display of the environmental information 100 and/or the guidance information 101 for the working machine 1 and a setting operation portion 105. When the second switching operation portion 104 is operated, the event handler 72A2 receives an input for switching the display between the environmental information 100 and/or the guidance information 101 for the working machine 1 and the setting operation portion 105, and the controller 72A1 causes the setting operation portion 105 to be displayed in the upper region 80A. The setting operation portion 105 receives input of setting information for the working machine 1.

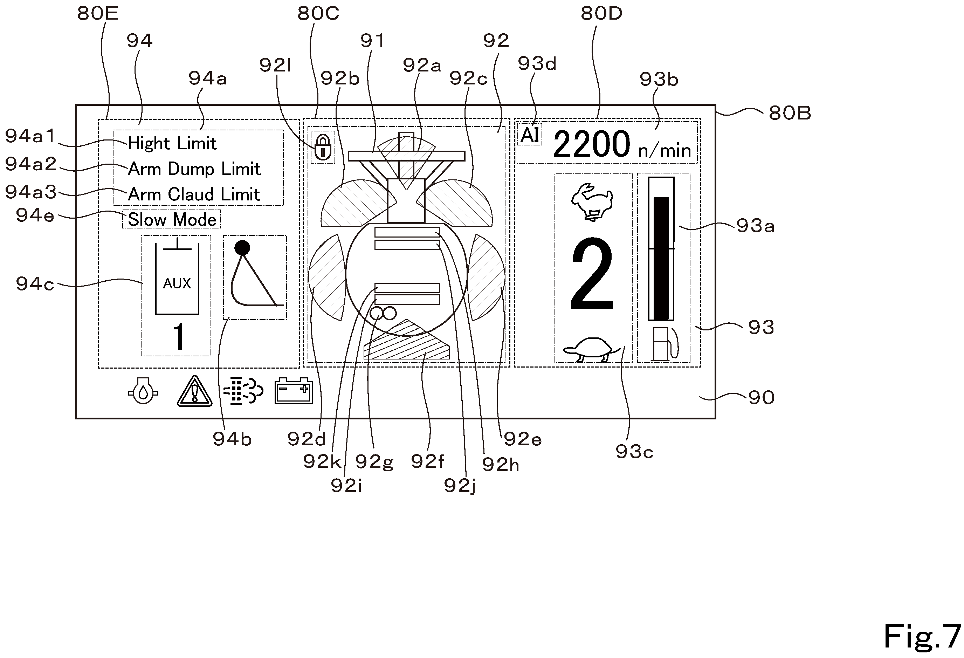

As illustrated in FIG. 7, in the lower region 80B of the first display screen 61A, the controller 72A1 causes an overhead view image 91 of the working machine 1 as viewed from above, and the supplementary information 92 that supplements the overhead view image 91 by indicating the state of one or more devices X provided in or on the working machine 1 to be displayed as the state information 90. The state information 90 includes the overhead view image 91 and the supplementary information 92. The controller 72A1 causes the overhead view image 91 to be displayed in a region 80C, which is at the center of the lower region 80B.

For example, as illustrated in FIG. 7, the supplementary information 92 indicates activation states of the lighting apparatus 30, the rotary beacon 22, the wiper system 76, the defogger 77, and the locking device 78. Further, the position where the supplementary information 92 is provided corresponds to the position of each of the devices X in the overhead view image 91. For example, as illustrated in FIG. 7, the supplementary information 92 is displayed as graphics superimposed on the overhead view image 91. Note that the shape of the supplementary information 92 is not limited. For example, the supplementary information 92 may be a balloon-shaped graphic, and the position where each of the devices X is provided on the machine body 2 may be indicated by placing a leader line on the overhead view image 91.

The controller 72A1 causes the activation states of the respective devices X input by the control unit 70 to be displayed as the supplementary information 92 on the first display 60A. The supplementary information 92 indicates the activation states of the respective devices X by varying their display forms. For example, the controller 72A1 switches each piece of supplementary information 92 between displayed and hidden in accordance with the state of each device X.

The controller 72A1 causes the supplementary information 92 corresponding to the state (lighting status) of the lighting apparatus 30 or the rotary beacon 22 to be displayed when the lighting apparatus 30 or the rotary beacon 22 is ON, and causes the supplementary information 92 to be hidden when either is OFF. Supplementary information 92a to 92g correspond respectively to the boom light 18, the headlight 19L, the headlight 19R, the side light 20L, the side light 20R, the rear light 21, and the rotary beacon 22.

The controller 72A1 causes the supplementary information 92 corresponding to the state of the wiper system 76 to be displayed when the wiper system 76 is activated (ON), and causes the supplementary information 92 to be hidden when the wiper system 76 is deactivated (OFF). Supplementary information 92h and 92i correspond respectively to the front wiper 76a and the rear wiper 76b of the wiper system 76.

The controller 72A1 causes the supplementary information 92 corresponding to the state of the defogger 77 to be displayed when the defogger 77 is blowing (ON), and causes the supplementary information 92 to be hidden when the defogger 77 is stopped (OFF). As illustrated in FIG. 4, supplementary information 92j and 92k correspond respectively to the blowout portions 53A and 53B of the defogger 77.

The controller 72A1 causes supplementary information 921 corresponding to the state (locking status) of the locking device 78 to be displayed when the locking system 78 is in a locked state, and causes the supplementary information 921 to be hidden when the locking system 78 is in an unlocked state.

Note that the display of the supplementary information 92 only needs to be indicative of the state of each device X; the controller 72A1 may vary the display color or brightness of the supplementary information 92 according to the state of each device X. For example, if the lighting apparatus 30 is capable of changing its brightness, the brightness of the supplementary information 92 may be varied based on the brightness of the lighting apparatus 30.

The controller 72A1 causes first information 93 relating to the machine body 2 of the working machine 1 to be displayed on one side in the width direction of the overhead view image 91 and the supplementary information 92 within the lower region 80B. The state information 90 includes the first information 93.

For example, as illustrated in FIG. 7, the controller 72A1 causes the first information 93 to be displayed in a region 80D on one side (right side) in the width direction of the region 80C where the overhead view image 91 and the supplementary information 92 are displayed. The first information 93 includes information relating to the machine body 2 (traveling device 3) acquired by the detector 73. The first information 93 includes one or more of the remaining amount of fuel, the state of charge of a battery, the rotational speed of the prime mover Eg, the activation state of the auto-idle function, and the speed stage state (speed stage information) of the traveling device 3.

The control unit 70 inputs information on the current remaining amount of fuel and the rotational speed of the prime mover Eg acquired by the detector 73, as well as the speed stage state of the traveling device 3, to the first display control apparatus 72A. The controller 72A1 converts these pieces of information input by the control unit 70 into images 93a to 93c which are displayable information, and causes them to be displayed in the region 80D.

Note that, if the prime mover Eg is an electric motor, the controller 72A1 may cause an image 93a indicating the state of charge of the battery to be displayed as the first information 93 in the region 80D.

Further, the first information 93 is not limited to the images 93a to 93c described above and may include other information. For example, the control unit 70 may input the activation state of the auto-idle function (whether the auto-idle function is being executed) to the first display control apparatus 72A, and the controller 72A1 may cause an image 93d to be displayed in the region 80D when the auto-idle function is being executed and cause the image 93d to be hidden when the auto-idle function is not being executed.

The controller 72A1 causes second information 94 relating to the working device 4 of the working machine 1 to be displayed on the other side in the width direction of the overhead view image 91 and the supplementary information 92 within the lower region 80B. The state information 90 includes the second information 94. The second information 94 includes one or more of the type of the attachment 17 mounted on the working device 4, the operation mode of the working device 4, the setting status regarding operation limits on the working device 4, and the flow rate setting status of the working device 4.

For example, as illustrated in FIG. 7, the controller 72A1 causes the second information 94 to be displayed in a region 80E on the other side (left side) in the width direction of the region 80C where the overhead view image 91 and the supplementary information 92 are displayed. The second information 94 includes information 94a relating to the operation mode or operation limits on the working device 4, type information 94b of the attachment 17, flow rate setting mode information 94c for the attachment 17, and information 94e relating to the operation mode of the working device 4.

More specifically, the control unit 70 inputs information regarding operation limits on the working device 4 to the first display control apparatus 72A. The controller 72A1 causes the information regarding the operation limits to be displayed in the region 80E. For example, the controller 72A1 causes images 94a1 to 94a3 corresponding to the respective operation limits to be displayed in the region 80E when there are such operation limits, and causes these images 94a1 to 94a3 to be hidden when no such operation limits exist. The information regarding the operation limits on the working device 4 includes, for example, a height-direction movement limit on the boom 15, an arm dump direction movement limit on the arm 16, an arm crowd direction movement limit on the arm 16, and the like.

The control unit 70 inputs the type of the attachment 17 to the first display control apparatus 72A, and the controller 72A1 causes an icon image 94b corresponding to the type of the attachment 17 (in FIG. 7, an icon image corresponding to a bucket X1) to be displayed in the region 80E.

The control unit 70 inputs a flow rate setting mode of the attachment 17 acquired by the flow rate setter 70a to the first display control apparatus 72A, and the controller 72A1 causes an icon image 94c corresponding to the flow rate setting mode to be displayed in the region 80E.

The control unit 70 inputs the operation mode of the working device 4 to the first display control apparatus 72A, and the controller 72A1 causes information 94e regarding the operation mode to be displayed in the region 80. For example, when the operation mode of the working device 4 is the slow mode, the controller 72A1 causes the information 94e "Slow Mode" to be displayed. When the operation mode of the working device 4 is not the slow mode, the controller 72A1 causes the information 94e to be hidden.

As illustrated in FIG. 5, the controller 72A1 causes the environmental information 100 to be displayed in the upper region 80A, and causes the captured images 102 acquired by the imagers 26 provided on the working machine 1 to be displayed as the environmental information 100. More specifically, the control unit 70 controls the imagers 26 to acquire the captured images 102. The control unit 70 inputs the captured images 102 as the environmental information 100 to the first display control apparatus 72A. The controller 72A1 causes the captured images 102 input by the control unit 70 to be displayed in the upper region 80A of the first display screen 61A of the first display 60A.

The controller 72A1 causes the first switching operation portion 103 for receiving an operation for switching the display of the multiple captured images 102 (102A, 102B) acquired by the multiple imagers 26 (26A, 26B) provided on the working machine 1 to be displayed at an upper portion of the upper region 80A of the first display screen 61A. The controller 72A1 causes the first switching operation portion 103 to be displayed in the upper region 80A where the captured images 102 are displayed. The first switching operation portion 103 is displayed at an upper portion of the upper region 80A of the first display screen 61A.

More specifically, a cyclic list indicating the imagers 26 to be displayed is stored in advance in the storage unit 72A3. When the event handler 72A2 receives an input operation on the first switching operation portion 103, it refers to the cyclic list in the storage unit 72A3 and inputs, to the control unit 70, an instruction signal specifying an imager 26. The cyclic list may define instruction signals for displaying each of the imagers 26A and 26B individually, or for displaying multiple imagers 26A and 26B simultaneously (concurrently). It may also define that the guidance information 101 described later is to be displayed.

While the controller 72A1 is causing the captured image 102A of the imager 26A to be displayed, when the operator U1 operates the first switching operation portion 103, the event handler 72A2 receives the operation on the first switching operation portion 103. The event handler 72A2 refers to the cyclic list and inputs, to the control unit 70, an instruction signal for acquiring the captured image 102B from the imager 26 (26B). Based on this instruction signal, the control unit 70 inputs the captured image 102B to the first display control apparatus 72A, and the controller 72A1 causes the input captured image 102B to be displayed in the upper region 80A.

As illustrated in FIG. 6, the controller 72A1 causes the guidance information 101 for the working machine 1 to be displayed as information relating to the working machine 1 in the first upper region 80A. For example, as illustrated in FIG. 6, the guidance information 101 includes an orientation image 101a indicating the current position and orientation of the working machine 1 (boom 15, arm 16, and attachment 17) and a cross-sectional image 101b of construction data. The display of the guidance information 101 in the upper region 80A is started when the operator U1 performs a predetermined operation on the first display 60A. Alternatively, the operator U1 may start the display of the guidance information 101 by operating the first switching operation portion 103.

Specifically, the control unit 70 detects the current position and orientation of the boom 15, the arm 16, and the attachment 17, and inputs them to the first display control apparatus 72A. For example, the control unit 70 detects the current position and orientation of the boom 15, the arm 16, and the attachment 17 based on information acquired from the detector 73.

The controller 72A1 converts the input position and orientation of the boom 15, the arm 16, and the attachment 17 into the orientation image 101a, which is information displayable on the first display screen 61A. The control unit 70 also inputs construction data stored in the machine storage unit 71 to the first display control apparatus 72A. The construction data is, for example, data indicating the state of a construction site after completion of work.

The controller 72A1 converts the input construction data into a cross-sectional image 101b. The controller 72A1 causes the guidance information 101 including the orientation image 101a and the cross-sectional image 101b to be displayed in the upper region 80A of the first display screen 61A of the first display 60A.

Note that the display format of the guidance information 101 is not limited to the above configuration, and display formats known in the art may be used. Additionally, the method for acquiring the current position and orientation of the boom 15, the arm 16, and the attachment 17, and the construction data is also not limited to the above configuration, and acquisition methods known in the art may be used.

The controller 72A1 causes the state information 90 to be displayed in the lower region 80B of the first display screen 61A while simultaneously causing the environmental information 100 to be displayed in the upper region 80A. The controller 72A1 may alternatively cause the state information 90 to be displayed in the lower region 80B of the first display screen 61A while simultaneously causing the guidance information 101 to be displayed in the upper region 80A thereof. The controller 72A1 may alternatively cause the state information 90 to be displayed in the lower region 80B of the first display screen 61A while simultaneously causing the state information 90 and the guidance information 101 to be displayed in the upper region 80A thereof.

As shown in FIG. 5, when an abnormality occurs, the controller 72A1 causes warning information 81 regarding a warning condition corresponding to the abnormality to be displayed. The warning information 81 includes a message image 81a indicating content regarding the warning condition, and an icon image 81b indicating a type regarding the warning condition. When an abnormality occurs, the controller 72A1 causes the warning information 81 to be displayed between the first upper region 80A and the first lower region 80B, or in the first lower region 80B. The message image 81a is a text image that allows the content of the warning information 81 to be displayed on the display screens 61A and 61B. The icon image 81b is an icon obtained by simplifying a graphic that suggests the content of the warning information 81, and indicates the type of the warning information 81. The storage unit 72A3 stores in advance a table associating the message image 81a corresponding to the warning information 81 with the icon image 81b.

When the abnormality detector 70b detects the warning information 81 corresponding to a warning condition, the control unit 70 inputs the warning information 81 to the controller 72A1 of the first display control apparatus 72A. The controller 72A1 refers to the storage unit 72A3 and converts the input warning information 81 into the message image 81a and the icon image 81b. The controller 72A1 causes the message image 81a and the icon image 81b to be displayed on the first display screen 61A. The message image 81a is positioned in an area 80F, which is located in the upper region 80A close to the lower region 80B. The icon image 81b is displayed in the lower region 80B.

Note that the display color, display size, display duration, and the like of the message image 81a and the icon image 81b may be changed depending on the warning condition. Further, the display duration of the message image 81a on the first display screen 61A may be varied from the display duration of the icon image 81b on the first display screen 61A. For example, after displaying the message image 81a for a predetermined period or longer, the controller 72A1 may hide the message image 81a. Meanwhile, the controller 72A1 continuously causes the icon image 81b to be displayed while the abnormality detector 70b is detecting the warning condition.

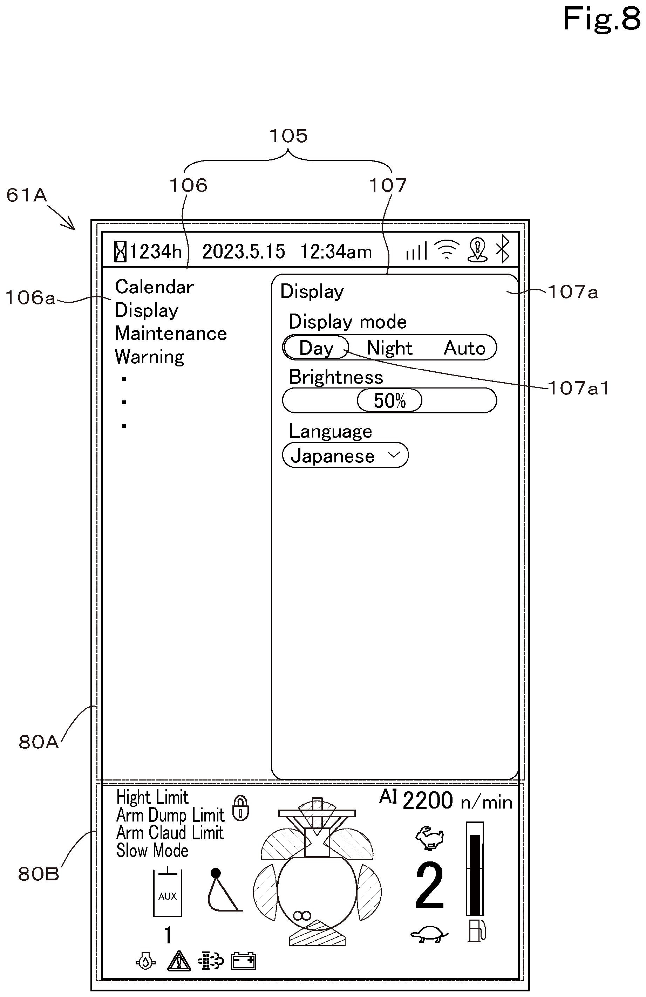

As illustrated in FIG. 8, the controller 72A1 causes the setting operation portion 105 for receiving input of setting information of the working machine 1 to be displayed in the upper region 80A instead of the environmental information 100 and/or the guidance information 101 for the working machine 1. The setting operation portion 105 enables various settings for the displays 60A and 60B and setting operations relating to maintenance of the working machine 1. The setting operation portion 105 includes a setting category selector 106 for selecting categories of setting information, and a setting information input unit 107.

For example, as illustrated in FIG. 8, when the operator U1 operates the category "Display" (106a) on the setting category selector 106, the controller 72A1 causes a setting information input unit 107a corresponding to "Display" to be displayed. Further, when the operator U1 operates "Display mode: Day" (107a1), the event handler 72A2 refers to the storage unit 72A3 and acquires brightness setting values of the first display 60A and the second display 60B corresponding to "Display mode: Day". The event handler 72A2 inputs the brightness setting value of the first display 60A to the controller 72A1. Based on the input setting value, the controller 72A1 controls the brightness of the first display 60A. The event handler 72A2 also inputs the brightness setting value to the second display control apparatus 72B. Based on the input setting value, the second display control apparatus 72B (controller 72B1) controls the brightness of the second display 60B.

As illustrated in FIG. 5, the controller 72A1 causes the second switching operation portion 104, which receives a switching operation between displaying the environmental information 100 and/or the guidance information 101 for the working machine 1 and displaying the setting operation portion 105, to be displayed in the upper region 80A. When the operator U1 operates the second switching operation portion 104, the event handler 72A2 inputs to the controller 72A1 an instruction signal for causing the setting operation portion 105 to be displayed. The controller 72A1 causes the setting operation portion 105 to be displayed in the upper region 80A of the first display screen 61A.

Hereinafter, screens displayed on the second display screen 61B of the second display 60B by the second display control apparatus 72B (controller 72B1) will be described.

The second display control apparatus 72B receives operations on multiple applications for the working machine 1. Examples of the applications include a first application (air-conditioning application) for operating the air conditioner 74, a second application (music application) for operating the audio device 75, a third application (flow rate setting application) for setting flow rates to a first service port 41 and a second service port 42, and the like.

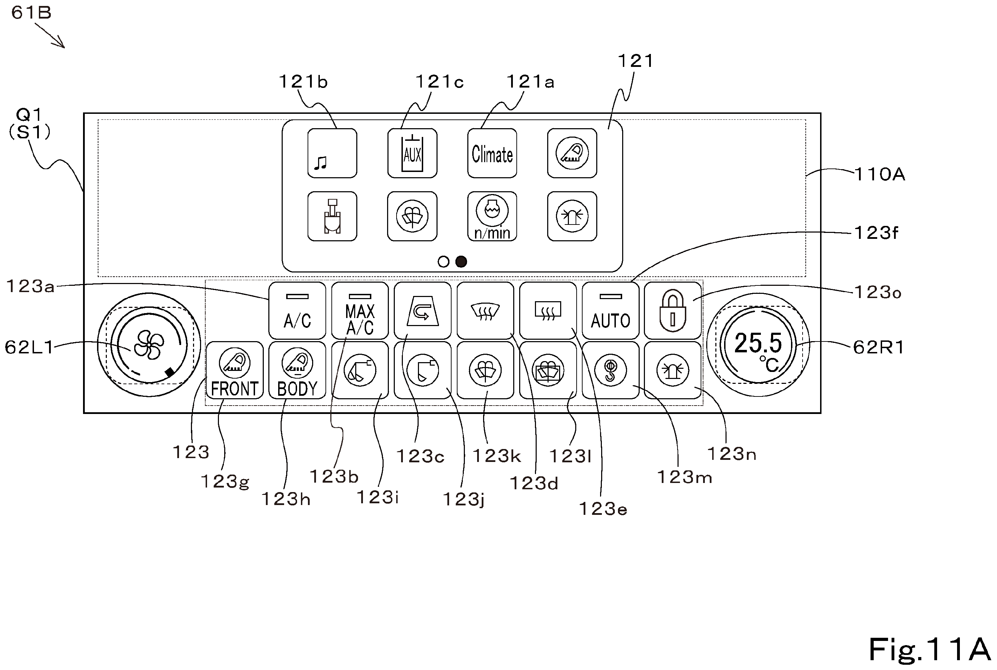

As illustrated in FIG. 5 and FIGS. 11A to 11D, the controller 72B1 causes a home screen Q1, a first setting screen (AC setting screen) Q2, a second setting screen (Music setting screen) Q3, and a third setting screen (flow rate setting screen) Q4 to be displayed on the second display screen 61B. Note that, in the following description, a state in which no application selection operation is performed and the controller 72B1 causes the home screen Q1 to be displayed on the second display screen 61B is referred to as a first display state S1, and a state in which an application selection operation is performed and the controller 72B1 causes the first setting screen Q2, the second setting screen Q3, or the third setting screen Q4 to be displayed on the second display screen 61B is referred to as a second display state S2. Additionally, it is sufficient for the applications to be those relating to the working machine 1, and the types and number of applications described above are not particularly limited.

As illustrated in FIG. 11A, in the first display state S1 (home screen Q1), the controller 72B1 causes a first operation portion 121, which receives a selection operation to select a to-be-operated application from among the multiple applications for the working machine 1, to be displayed on the second display screen 61B. As illustrated in FIGS. 10A and 11A, the controller 72B1 causes the first operation portion 121 to be displayed in a region 110A including a first display region 110E and a second display region 110D of the second display screen 61B. The first operation portion 121 is displayed at the center of the region 110A. In the region 110A, multiple application icons (images) that receive a selection operation to select a to-be-operated application are arranged side by side. As illustrated in FIG. 11A, an application icon 121a is an icon that indicates the first application, an application icon 121b is an icon that indicates the second application, and an application icon 121c is an icon that indicates the third application.

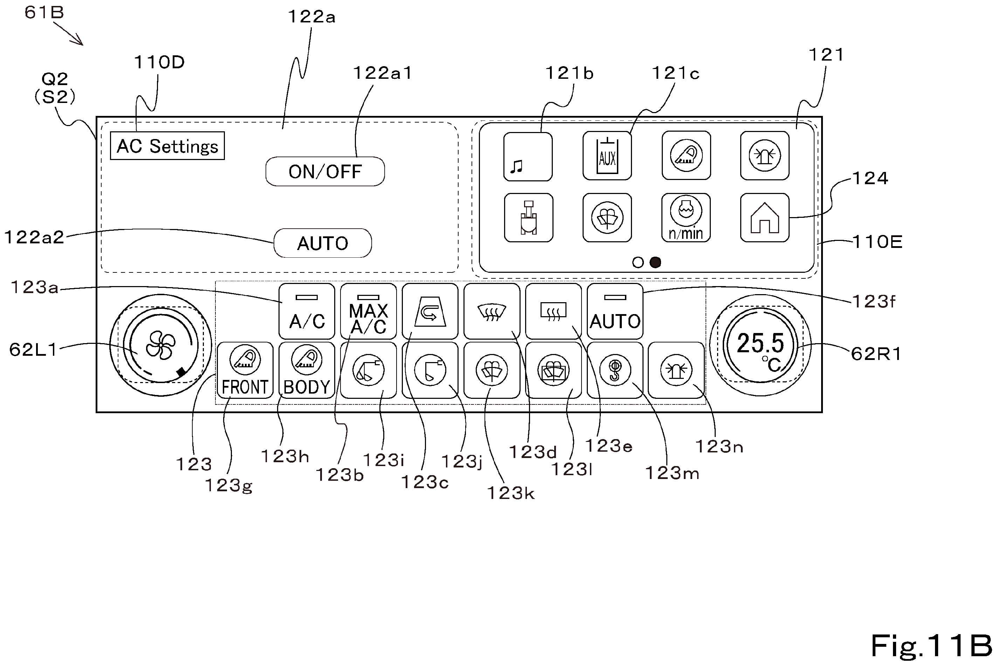

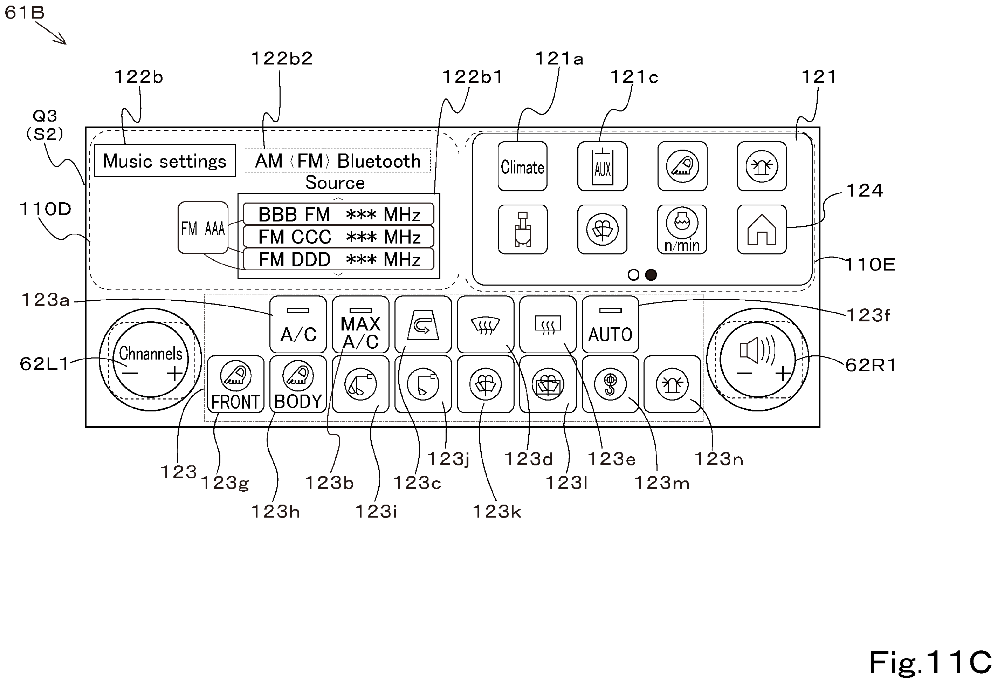

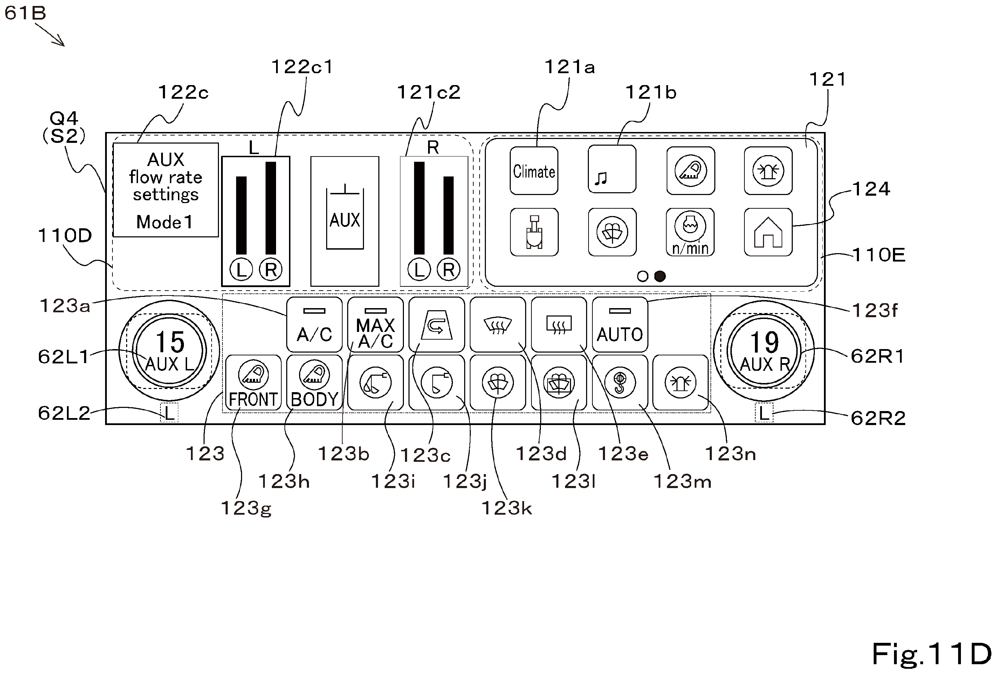

As illustrated in FIGS. 11B and 11C, in the second display state S2, the controller 72B1 causes a second operation portion 122 to operate the to-be-operated application and the first operation portion 121 to be displayed on the second display screen 61B. As illustrated in FIGS. 10A, 11B, and 11C, the controller 72B1 causes the second operation portion 122 to be displayed in the second display region 110D, which is an upper region of the second display screen 61B. The second operation portion 122 is a screen for operating the application; for example, as illustrated in each of FIGS. 11B to 11D, an application screen 122a (FIG. 11B) is an operation screen for operating the first application; an application screen 122b (FIG. 11C) is an operation screen for operating the second application; and an application screen 122c (FIG. 11D) is an operation screen for operating the third application. The controller 72B1 causes the first operation portion 121 to be displayed in the first display region 110E, which is an upper region of the second display screen 61B. In the second display state S2, the controller 72B1 causes a fourth operation portion 124, which is for receiving an operation to transition to the first display state S1 (home screen Q1), to be displayed. For example, the fourth operation portion 124 is a home icon, and, as illustrated in FIG. 11B, and it is arranged alongside the first operation portion 121 in the first display region 110E. That is, when a selection operation to select an application is performed, the controller 72B1 causes, as the second display state S2, the first operation portion 121, the second operation portion 122, and the fourth operation portion 124 to be displayed on the second display screen 61B.

Next, the state transition of the second display screen 61B will be described.

As shown in FIGS. 11A to 11D, the controller 72B1 causes the first operation portion 121 (application icons 121a to 121c), which receives a selection operation to select a to-be-operated application from among the multiple applications for the working machine 1, to be displayed on the second display screen 61B of the second display 60B. Once a to-be-operated application is selected via the first operation portion 121 (when a selection operation to select an application is performed), the controller 72B1 causes the second display screen 61B to transition to the second display state S2 for operating that application.

When the operator U1 operates any one of the application icons 121a to 121c included in the first operation portion 121, the second display screen 61B transitions to the second display state S2 for operating the application that the operator U1 has touched.

In the second display state S2, the controller 72B1 causes the first operation portion 121 to perform a selection operation to select, from among the multiple applications, applications other than that corresponding to the second operation portion 122 to be displayed. The controller 72B1 causes the application icons 121a to 121c other than the application that the operator U1 has selected to be displayed as the first operation portion 121 on the second display screen 61B.

The controller 72B1 is capable of causing the second display screen 61B to transition to the first display state S1. On the second display screen 61B in the second display state S2, the controller 72B1 causes the fourth operation portion 124, which receives an operation to transition to the first display state S1, to be displayed, and, when the fourth operation portion 124 is operated, causes the second display screen 61B to transition from the second display state S2 to the first display state S1. In the case of transitioning from the second display state S2 to the first display state S1, the controller 72B1 causes the second operation portion 122 to be hidden from the second display region 110D.

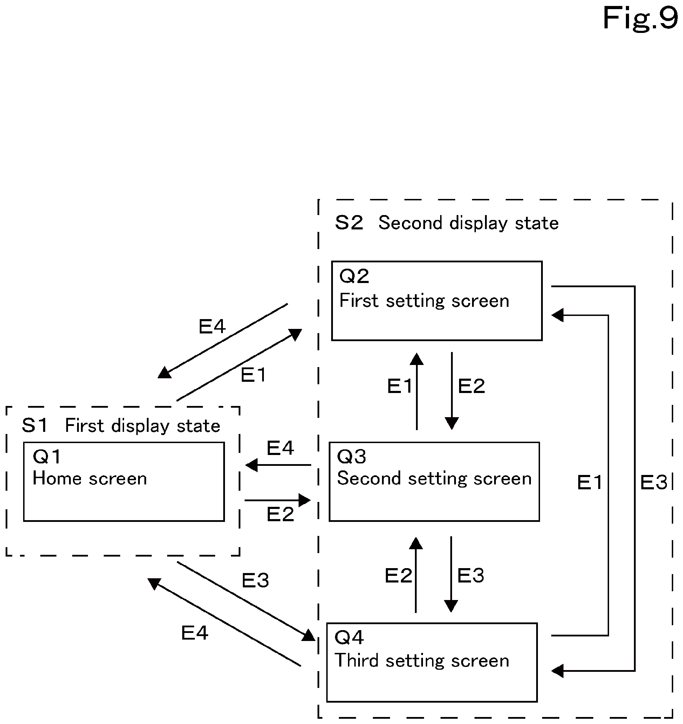

FIG. 9 is a state transition diagram of the second display screen 61B. Events E1 to E4 represent operations by the operator U1 that trigger the controller 72B1 to cause the screen on the second display screen 61B to transition. When any of events E1 to E4 occurs, the controller 72B1 causes the screen on the second display screen 61B to transition. Events E1 to E4 represent that the operator U1 has operated the application icon 121a (air conditioning), the application icon 121b (music), the application icon 121c (aux), and the fourth operation portion 124 (home icon), respectively. When event E1 occurs, the controller 72B1 causes the second display screen 61B to transition to the first setting screen Q2 in the second display state S2; and, when event E2 occurs, the controller 72B1 causes the second display screen 61B to transition to the second setting screen Q3 in the second display state S2. Further, when event E3 occurs, the controller 72B1 causes the second display screen 61B to transition to the third setting screen Q4 in the second display state S2; and, when event E4 occurs, the controller 72B1 causes the second display screen 61B to transition to the home screen Q1 in the first display state S1.

Next, using FIGS. 11A to 11D, the state transition (screen transition) of the second display screen 61B will be described. FIG. 11B illustrates the first setting screen Q2 in the second display state S2. When the operator U1 operates the application icon 121a (FIGS. 11A, 11C, and 11D) (when event E1 occurs), the controller 72B1 causes the first setting screen Q2 to be displayed on the second display screen 61B.

The controller 72B1 causes the application screen 122a for operating the first application to be displayed as the second operation portion 122 in the second display region 110D of the second display screen 61B. The controller 72B1 also causes the application icon 121b, the application icon 121c, and the like to be displayed as the first operation portion 121 in the first display region 110E of the second display screen 61B. If the second display screen 61B is displaying the first setting screen Q2, the controller 72B1 causes the application icon 121a corresponding to the application to be hidden, and causes the fourth operation portion 124 to be displayed on the second display screen 61B.

FIG. 11C illustrates the second setting screen Q3 in the second display state S2. When the operator U1 operates the application icon 121b (FIGS. 11A, 11B, and 11D) (when event E2 occurs), the controller 72B1 causes the second setting screen Q3 to be displayed on the second display screen 61B. The controller 72B1 causes the application screen 122b for operating the second application to be displayed as the second operation portion 122 in the second display region 110D of the second display screen 61B. The controller 72B1 also causes the application icon 121a, the application icon 121c, and the like to be displayed as the first operation portion 121 in the first display region 110E of the second display screen 61B. If the second display screen 61B is displaying the second setting screen Q3, the controller 72B1 causes the application icon 121b corresponding to the application to be hidden, and causes the fourth operation portion 124 to be displayed on the second display screen 61B.

FIG. 11D illustrates the third setting screen Q4 in the second display state S2. When the operator U1 operates the application icon 121c (FIGS. 11A, 11B, and 11D) (when event E3 occurs), the controller 72B1 causes the third setting screen Q4 to be displayed on the second display screen 61B. The controller 72B1 causes the application screen 122c for operating the third application to be displayed as the second operation portion 122 in the second display region 110D of the second display screen 61B. The controller 72B1 also causes the application icon 121a, the application icon 121b, and the like to be displayed as the first operation portion 121 in the first display region 110E of the second display screen 61B. If the second display screen 61B is displaying the third setting screen Q4, the controller 72B1 causes the application icon 121c corresponding to the application to be hidden, and causes the fourth operation portion 124 to be displayed on the second display screen 61B.

FIG. 11A illustrates the home screen Q1 in the first display state S1. When the operator U1 operates the fourth operation portion 124 (FIGS. 11B, 11C, and 11D) (when event E4 occurs), the controller 72B1 causes the home screen Q1 to be displayed on the second display screen 61B. The controller 72B1 causes the fourth operation portion 124 to be hidden, but causes the application icon 121a, the application icon 121b, the application icon 121c, and the like to be displayed as the first operation portion 121 in the region 110A of the second display screen 61B.

Thus, when the operator U1 operates the first operation portion 121 or the fourth operation portion 124, the controller 72B1 can switch (transition) among the home screen Q1, which is in the first display state S1, the first setting screen Q2, the second setting screen Q3, and the third setting screen Q4, which are in the second display state S2, and cause them to be displayed on the second display screen 61B. The controller 72B1 can also switch among the first setting screen Q2, the second setting screen Q3, and the third setting screen Q4 without returning to the home screen Q1.

Hereinafter, the second operation portion 122 and the third operation portion 123 operated on the second display screen 61B will be described in detail.

As illustrated in FIG. 10A and FIGS. 11B to 11D, in the second display state S2 (first setting screen Q2 to third setting screen Q4), the controller 72B1 causes the third operation portion 123 to operate the functions of the applications, in addition to the first operation portion 121 and the second operation portion 122, to be displayed in the third display region 110C of the second display screen 61B. As illustrated in FIGS. 10A and 11A, in the first display state S1 (home screen Q1), the controller 72B1 causes the third operation portion 123, in addition to the first operation portion 121, to be displayed in the third display region 110C. The third operation portion 123 includes function icons (images) 123a to 123o representing the functions of the applications. In the third display region 110C, the function icons 123a to 123o for operating the functions of the applications are arranged side by side.

The function icon 123a represents a function for switching between activation (ON) of the air conditioner 74 and deactivation (OFF) of the air conditioner 74. The function icon 123b indicates a function for switching between activation (ON) of the air conditioner 74 to maximize airflow of conditioned air and deactivation (OFF) of the air conditioner 74. The function icon 123c indicates a function for switching between internal air circulation and outside air introduction of the air conditioner 74.

The function icon 123d indicates a function for switching between blowing (ON) of conditioned air by the defogger 77 toward the front panel and stopping (OFF) thereof. The function icon 123e indicates a function for switching between blowing (ON) of conditioned air by the defogger 77 toward the rear panel and stopping (OFF) thereof.

The function icon 123f indicates a function for switching between activation (ON) of the air conditioner 74 to automatically control the airflow and temperature of conditioned air and deactivation (OFF) of the air conditioner 74.

The function icon 123g indicates a function for switching between turning on (ON) and turning off (OFF) the lighting apparatus 30 (e.g., the boom light 18 and the headlight 19) capable of illuminating forward of the machine body 2. The function icon 123h indicates a function for switching between turning on (ON) and turning off (OFF) the lighting apparatus 30 (e.g., the side lights 20L and 20R and the rear light 21) arranged on the machine body 2 and capable of illuminating the surroundings of the machine body 2.

The function icon 123i indicates a function for switching whether to set an operation limit on the arm 16 in the arm dump direction in the control unit 70. The function icon 123j indicates a function for switching whether to set an operation limit on the arm 16 in the arm dump direction and the arm crowd direction in the control unit 70.

The function icon 123k indicates a function for switching between activation (ON) and deactivation (OFF) of the front wiper 76a of the wiper system 76. The function icon 1231 indicates a function for switching between activation (ON) and deactivation (OFF) of the rear wiper 76b of the wiper system 76.

The function icon 123m indicates a function for switching between activation (ON) and deactivation (OFF) of the crane mode in the control unit 70.

The function icon 123n indicates a function for switching between activation (ON) and deactivation (OFF) of the rotary beacon 22.

The function icon 123o indicates a function for switching between locking and unlocking of the locking device 78.

The controller 72B1 can cause functions different from those of an application displayed on the second operation portion 122 to be displayed on the third operation portion 123. For example, as illustrated in FIG. 11C (second setting screen Q3), the controller 72A1 causes the application screen 122b for operating the second application to be displayed as the second operation portion 122, and causes the function icon 123a (third operation portion 123), which operates activation (ON) and deactivation (OFF) of the air conditioner 74, which is a function for the first application, to be displayed.

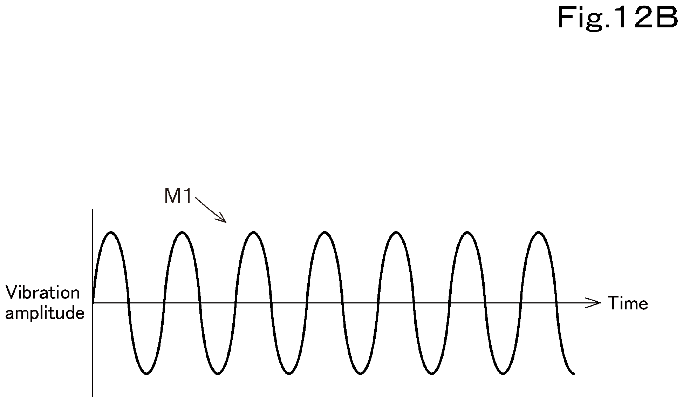

Note that the controller 72A1 may change the display of the third operation portion 123 (function icons 123a to 123o) depending on the setting screen. For example, as illustrated in FIG. 11A (home screen Q1), the controller 72A1 causes the function icon 123o to be displayed. As illustrated in FIG. 12B (first setting screen Q2), the controller 72A1 causes the function icon 123o to be hidden.

The controller 72B1 causes multiple function operation members (images) for respectively operating multiple functions of the selected application to be displayed on the second operation portion 122.

As illustrated in FIG. 11B, the controller 72B1 causes function operation members 122a1 and 122a2 to be displayed on the application screen 122a. The function operation member 122a1 indicates an operation for switching between activation (ON) and deactivation (OFF) of the air conditioner 74 of the air conditioner 74. The function operation member 122a1 indicates an operation for switching between starting (ON) and stopping (OFF) of automatic control of the air conditioner 74.

As illustrated in FIG. 11C, the controller 72B1 causes function operation members 122b1 and 122b2 to be displayed on the application screen 122b. The function operation member 122b1 indicates an operation for switching the reception frequency of the radio of the audio device 75. The function operation member 122b2 indicates an operation for switching operation of the audio device 75 to one of AM broadcasting, FM broadcasting, and connection to an external terminal.

As illustrated in FIG. 11D, the controller 72B1 causes function operation members 122c1 and 122c2 to be displayed on the application screen 122c. Operations on the function operation members 122c1 and 122c2 will be described later.

The controller 72B1 causes the same function as that in the case where the operation portion 120 for operating the selected application is displayed as the second operation portion 122 to be displayed in an operable manner on the third operation portion 123.
For example, as illustrated in FIG. 11B (first setting screen Q2), the function operation member 122a1 of the second operation portion 122 and the function icon 123a of the third operation portion 123 both indicate the same function for switching between activation (ON) and deactivation (OFF) of the air conditioner 74. The controller 72B1 causes the function operation member 122a1 and the function icon 123a to be displayed simultaneously on the second display screen 61B.

Note that the controller 72B1 may also cause a function operation member for operating the same function as operation content (function) received by each of the operation actuators 62 to be displayed simultaneously on the second operation portion 122. For example, as illustrated in FIG. 11C (second setting screen Q3), the function operation member 122c1 and the operation actuator 62L both indicate a function for switching the reception frequency of the radio.

Hereinafter, operations received by the event handler 72B2 will be described below. The event handler 72B2 receives operation inputs relating to a device X. Specifically, when the operator U1 operates the operation portion 120 (first operation portion 121, second operation portion 122, third operation portion 123, and fourth operation portion 124), the event handler 72B2 detects that the operation portion 120 has been operated (i.e., that an event has occurred). Upon detecting that the operation portion 120 has been operated, the event handler 72B2 inputs, to the control unit 70 or the controller 72B1, an instruction signal for performing operation processing on a device X corresponding to the operation portion 120.

Specifically, when the operator U1 operates the application icon 121a (FIG. 5), the event handler 72B2 detects that the application icon 121a has been operated. The event handler 72B2 then inputs, to the controller 72B1, an instruction signal for displaying the first setting screen Q2. The controller 72B1 causes the first setting screen Q2 (FIG. 11B) to be displayed on the second display screen 61B.

Additionally, when the operator U1 operates the function icon 123a, the event handler 72B2 detects that the function icon 123a has been operated. The event handler 72B2 then inputs, to the control unit 70, an instruction signal for switching between activation (ON) and deactivation (OFF) of the air conditioner 74. The control unit 70 controls the activation of the air conditioner 74 in accordance with the instruction signal input by the event handler 72B2.

Further, on the first setting screen Q2, when the operator U1 operates the function operation member 122a1, the event handler 72B2 detects that the function operation member 122a1 has been operated. The event handler 72B2 then inputs, to the control unit 70, an instruction signal for switching between blowing (ON) and stopping (OFF) of conditioned air from the blowout portion 52A (FIG. 4). The control unit 70 controls operation of the air conditioner 74 in accordance with the instruction signal input by the event handler 72B2.

In addition to the operation portion 120, the event handler 72B2 also receives an operation on each of the operation actuators 62 provided on the second display screen 61B as an operation input relating to a device X. The operation target of each of the operation actuators 62 can be selectively switched (changed) among the devices X in accordance with an operation on the operation portion 120 (first operation portion 121, second operation portion 122, third operation portion 123, and fourth operation portion 124). The controller 72B1 causes second images (application icons 121a to 121c, function operation members 122a1, 122a2, 122b1, 122b2, 122c1, and 122c2, and function icons 123a to 123o) indicating operation targets (devices X) to be displayed as the operation portion 120 on the second display image (second display screen) 61B. When the operation portion 120 is operated (i.e., when a second image is selected), the event handler 72B2 changes the operation input received by the operation actuator 62 in accordance with the application selected by the operation portion 120 or the device X serving as the operation target.

When the operation target of one of the operation actuators 62 is changed, the event handler 72B2 inputs, to the controller 72A1, an instruction signal for changing the display of the operation target of the operation actuator 62. The controller 72A1 changes the display indicating the operation target of the operation actuator 62 on the second display screen 61B based on the instruction signal input from the event handler 72B2 (in accordance with the selected device X).

For example, as illustrated in FIG. 11D, the controller 72A1 causes first images 62L1, 62L2, 62R1, and 62R2 indicating operation content (operation targets) received by the operation actuators 62 to be displayed in the vicinity of the operation actuators 62. Upon receiving an instruction signal from the event handler 72B2, the controller 72B1 performs, based on the instruction signal, control to switch (change) the display of the first images 62L1, 62L2, 62R1, and 62R2 arranged in the vicinity of the operation actuators 62.

As described above, a through-hole is provided in the central portion of each of the operation actuators 62, allowing the operator U1 to visually recognize the display within the cylindrical interior of each of the operation actuators 62 on the second display screen 61B. Specifically, the central portion of the operation actuator 62L corresponds to the region 110F (FIG. 10A), and the operator U1 can visually recognize the display in the region 110F. The controller 72B1 causes the first image 62L1 indicating the operation target received by the operation actuator 62L to be displayed in the region 110F of the second display screen 61B.

The central portion of the operation actuator 62R corresponds to the region 110G (FIG. 10A), and the operator U1 can visually recognize the region 110G. The controller 72B1 causes the first image 62R1 indicating the operation target received by the operation actuator 62R to be displayed in the region 110G of the second display screen 61B.

As illustrated in FIG. 10A, FIG. 11A (home screen Q1), and FIG. 11B (first setting screen Q2), the controller 72B1 causes the first image 62L1 indicating an operation for adjusting the airflow to be displayed in the region 110F where the operation actuator 62L is located. The controller 72B1 causes the first image 62R1 indicating an operation for adjusting temperature to be displayed in the region 110G where the operation actuator 62R is located.

Note that the controller 72B1 may also display current information relating to a function received by one of the operation actuators 62 together with the operation target of the operation actuator 62. For example, as illustrated in FIG. 11A (home screen Q1) and FIG. 11B (first setting screen Q2), the controller 72B1 causes current preset temperature information set to the air conditioner 74 to be displayed as the first image 62R1 in the region 110F of the second display screen 61B.

The controller 72B1 causes the first images 62L2 and 62R2 indicating the operation targets of the operation actuators 62 to be displayed in regions near the operation actuators 62. For example, as illustrated in FIGS. 10A and 11D (third setting screen Q4), the controller 72B1 causes the first images 62L2 and 62R2, which indicate that the control valve 31 for adjusting a first supply flow rate and a second supply flow rate is the operation target, to be displayed in regions 110Fa and 110Ga of the second display screen 61B in the vicinity of the operation actuators 62.

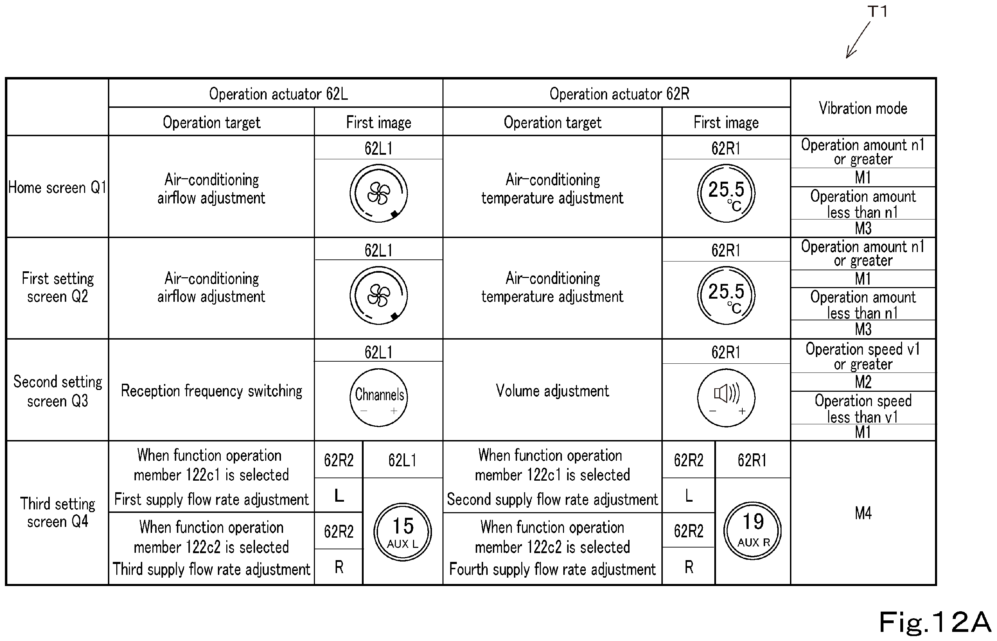

As illustrated in FIG. 12A, the storage unit 72B3 stores a table T1 in which an operation target received by one of the operation actuators 62 for each operation screen is associated with a corresponding one of the first images 62L1, 62L2, 62R1, and 62R2 indicating operation target. For example, the event handler 72B2 refers to the table T1 and switches the operation target received one of by the operation actuators 62 in accordance with the selected application on the first operation portion 121. When the operator U1 performs an operation to rotate one of the operation actuators 62, the event handler 72B2 detects a rotation direction and an operation amount of the operation actuator 62. The event handler 72B2 converts the detected operation amount into an instruction signal according to the table T1, and inputs the instruction signal to the control unit 70. The control unit 70 performs control in accordance with the input instruction signal.

Specifically, when the operator U1 operates the application icon 121a (when the first application is selected via the first operation portion 121), the event handler 72B2 refers to the table T1 and changes the operation target received by the operation actuator 62L to an operation for adjusting airflow, and the operation target received by the operation actuator 62R to an operation for adjusting conditioned air temperature. The event handler 72B2 inputs to the controller 72B1 an instruction signal for causing the first setting screen Q2 to be displayed. Based on the instruction signal from the event handler 72B2 and the table T1, the controller 72B1 causes the first setting screen Q2 to be displayed on the second display screen 61B. Specifically, the controller 72B1 causes the first image 62L1 indicating an operation for adjusting airflow of conditioned air to be displayed in the region 110F of the second display screen 61B. The controller 72B1 causes the first image 62R1 indicating an operation for adjusting conditioned air temperature to be displayed in the region 110G of the second display screen 61B.

When the operator U1 performs an operation to rotate the operation actuator 62L on the first setting screen Q2, the event handler 72B2 detects a rotation direction and an operation amount of the operation actuator 62L. The event handler 72B2 converts the rotation direction and operation amount detected by the operation actuator 62L into an instruction signal for controlling airflow of the air conditioner 74. The event handler 72B2 inputs the instruction signal for controlling airflow of the air conditioner 74 to the control unit 70.

When the operator U1 performs an operation to rotate the operation actuator 62R on the first setting screen Q2, the event handler 72B2 detects a rotation direction and an operation amount of the operation actuator 62R. The event handler 72B2 converts the rotation direction and operation amount detected by the operation actuator 62R into an instruction signal for controlling the temperature of the air conditioner 74. The event handler 72B2 inputs the instruction signal for controlling the temperature of the air conditioner 74 to the control unit 70.

When the operator U1 operates the application icon 121b (when the second application is selected via the first operation portion 121), the event handler 72B2 refers to the table T1 and changes the operation target received by the operation actuator 62L to an operation for switching the reception frequency of the radio, and the operation target received by the operation actuator 62R to an operation for adjusting the volume of the speaker. The event handler 72B2 inputs to the controller 72B1 an instruction signal for causing the second setting screen Q3 to be displayed. Based on the instruction signal from the event handler 72B2 and the table T1, the controller 72B1 causes the second setting screen Q3 to be displayed on the second display screen 61B. Specifically, the controller 72B1 causes the first image 62L1 indicating an operation for switching the reception frequency of the radio to be displayed in the region 110F of the second display screen 61B. The controller 72B1 causes the first image 62R1 indicating an operation for adjusting the volume of the speaker to be displayed in the region 110G of the second display screen 61B.

Note that the event handler 72B2 may also change the operation target received by each of the operation actuators 62 in accordance with an operation on the second operation portion 122.

As illustrated in FIG. 11D (third setting screen Q4), when the operator U1 operates the function operation member 122c1, which is the second operation portion 122, the event handler 72B2 refers to the table T1 and changes the operation received by the operation actuator 62L to an operation for adjusting the first supply flow rate, and the operation target received by the operation actuator 62R to an operation for adjusting the second supply flow rate.

When the operator U1 operates the function operation member 122c2, which is the second operation portion 122, the event handler 72B2 refers to the table T1 and changes the operation target received by the operation actuator 62L to an operation for adjusting a third supply flow rate, and the operation target received by the operation actuator 62R to an operation for adjusting a fourth supply flow rate.

Further, in accordance with an operation on the second operation portion 122 (in accordance with an instruction signal by the event handler 72B2), the controller 72B1 refers to the table T1 and performs control to switch the first images 62L1, 62L2, 62R1, and 62R2 to be displayed on the second display screen 61B.

Note that, although the case in which the flow rates of hydraulic fluid supplied to the first service port 41 and the second service port 42 are adjusted by the operation actuators 62L and 62R has been described in the present example embodiment, this does not imply any limitation. Alternatively, the flow rates to actuators such as the dozer cylinder C1, swing cylinder C2, boom cylinder C3, arm cylinder C4, attachment cylinder C5, slewing motor MT, first traveling motor ML, second traveling motor MR, and the like may be adjustable with the operation actuators 62L and 62R.

Further, upon receiving an operation on the fourth operation portion 124, the event handler 72B2 and the controller 72B1 may switch the operation target received by each of the operation actuators 62 and the first images indicating the operation target of each of the operation actuators 62. For example, as illustrated in FIG. 11A (home screen Q1) and FIG. 9, when the controller 72B1 is displaying the home screen Q1 on the second display screen 61B, the controller 72B1 causes the first images 62L1 and 62R1 indicating air-conditioning operation of the air conditioner 74 to be displayed on the second display screen 61B. The event handler 72B2 switches the operation target received by each of the operation actuators 62 to operations for adjusting the airflow and temperature of the air conditioner 74.

As illustrated in FIG. 5, the second display 60B includes a vibration element 63. The event handler 72B2 performs control to cause the vibration element 63 to vibrate in response to an operation input to at least one of the operation portion 120 and the operation actuators 62.

More specifically, when the operator U1 brings a fingertip into contact with the operation portion 120, the event handler 72B2 detects that the operation portion 120 has been operated. The event handler 72B2 inputs, to the control unit 70, an instruction signal for an operation relating to the working machine 1 corresponding to the operation portion 120, and causes the vibration element 63 to vibrate for a predetermined period of time. The predetermined period for causing the vibration element 63 to vibrate is, for example, approximately 0.1 seconds and is relatively short.

Note that the predetermined period for causing the vibration element 63 to vibrate is not limited, as long as it is a duration that allows the operator U1 to grasp that the operation input on the second display 60B has been received.

Additionally, while the operator U1 is pressing and holding the operation portion 120, the event handler 72B2 may continuously cause the vibration element 63 to vibrate. More specifically, when the event handler 72B2 detects contact with the operation portion 120, the event handler 72B2 starts (ON) vibration of the vibration element 63. Further, when the contact with the operation portion 120 is no longer detected, the event handler 72B2 stops (OFF) the vibration of the vibration element 63.

While the operator U1 is operating one of the operation actuator 62, the event handler 72B2 causes the vibration element 63 to vibrate. More specifically, when the operator U1 performs an operation to rotate one of the operation actuators 62, the event handler 72B2 detects the operation amount and operation speed of the operation actuator 62. The event handler 72B2 inputs, to the control unit 70, an instruction signal for an operation relating to the working machine 1 corresponding to the operation actuator 62, and causes the vibration element 63 to vibrate.

When an operation input to one of the operation actuators 62 is performed, the event handler 72B2 changes a vibration mode of the vibration element 63 with respect to the operation amount of the operation actuator 62 in accordance with the operation target of the operation actuator 62. The storage unit 72B3 stores in advance multiple vibration modes in which vibration frequency, vibration amplitude, and vibration pattern are varied.

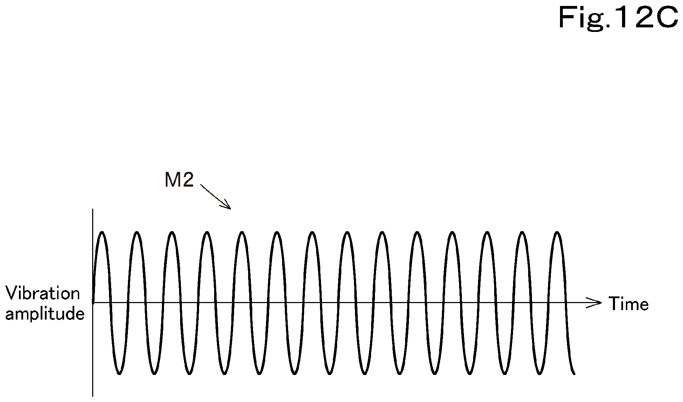

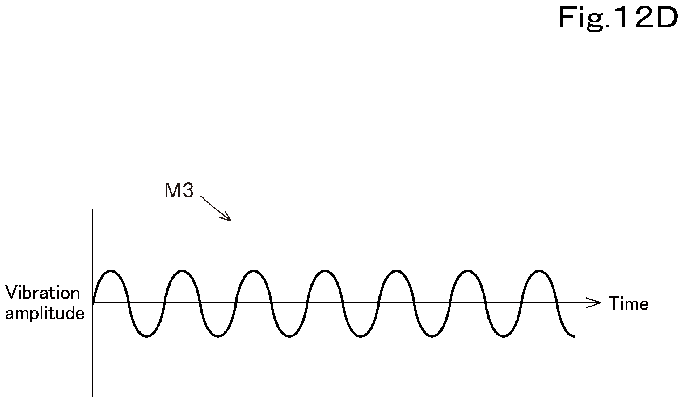

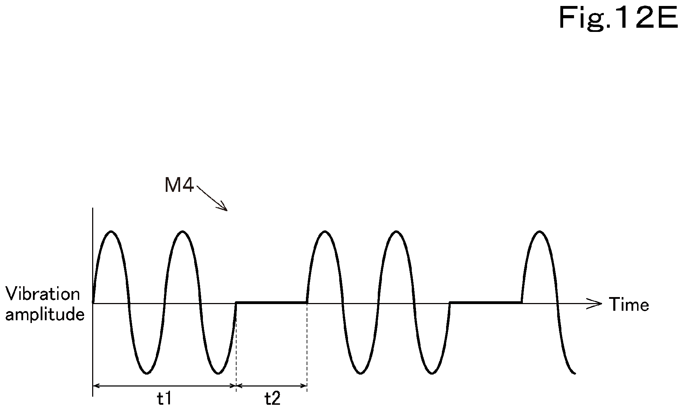

FIGS. 12B to 12E are diagrams illustrating modes of vibration of the vibration element 63. As illustrated in FIGS. 12B and 12C, vibration mode M1 and vibration mode M2 differ in vibration frequency. As illustrated in FIGS. 12B and 12D, vibration mode M1 and vibration mode M3 differ in vibration amplitude. As illustrated in FIGS. 12B and 12E, vibration mode M4 periodically repeats vibration (vibration ON) with substantially the same vibration frequency and vibration amplitude as vibration mode M1 for a predetermined time t1, and stopping of vibration (vibration OFF) for a predetermined time t2. That is, vibration mode M1 and vibration mode M4 differ in vibration pattern.

For example, as illustrated in FIG. 12A, the table T1 stores an operation target of each of the operation actuators 62 in association with vibration modes M1 to M4. When the operator U1 performs an operation to rotate one of the operation actuators 62, the event handler 72B2 refers to the table T1 and acquires a vibration mode corresponding to an operation target (device) selected as the operation target. The event handler 72B2 causes the vibration element 63 to vibrate based on the acquired vibration mode.

The event handler 72B2 changes the vibration frequency or vibration amplitude of the vibration element 63 in accordance with at least one of the operation speed and operation amount of the operation actuator 62.

For example, the event handler 72B2 switches the vibration mode in two stages depending on whether the operation speed relative to the operation actuator 62 is less than a predetermined value v1 or greater than or equal to v1. The event handler 72B2 switches the vibration mode in two stages depending on whether the operation amount relative to the operation actuator 62 is less than a predetermined value n1 or greater than or equal to n1. Note that the number of stages described above is merely an example and is not limited thereto.

As illustrated in FIG. 12A, the table T1 stores an operation speed and an operation amount relative to each of the operation actuators 62 in association with a vibration mode. When the operator U1 performs an operation to rotate one of the operation actuators 62, the event handler 72B2 detects the operation amount and operation speed of the operation actuator 62. The event handler 72B2 refers to the table T1, acquires a vibration mode corresponding to the operation target of the operation actuator 62, the operation amount of the operation actuator 62, and the operation speed of the operation actuator 62, and causes the vibration element 63 to vibrate.

Note that the event handler 72B2 may continuously change the vibration frequency and/or vibration amplitude of the vibration element 63 in accordance with the operation speed and/or operation amount. For example, the storage unit 72B3 stores in advance, as one of the vibration modes, a calculation formula in which an operation speed and/or an operation amount relative to each of the operation actuators 62 are used as weighting values, in association with the table T1. When the operator U1 performs an operation to rotate one of the operation actuators 62, the event handler 72B2 refers to the table T1 to acquire the calculation formula (vibration mode). The event handler 72B2 calculates the vibration frequency and/or the vibration amplitude using the operation speed and/or the operation amount and the calculation formula. The event handler 72B2 causes the vibration element 63 to vibrate based on the calculated vibration frequency and/or vibration amplitude.

### [Second Example Embodiment]

In the first example embodiment described above, the case in which the working machine 1 includes the first display 60A and the second display 60B has been described. However, in a case where the working machine 1 includes only the second display 60B, information relating to the working machine 1 may be displayed on the second display screen 61B (display screen 61B). Hereinafter, the working machine 1 according to the second example embodiment will be described focusing mainly on configurations that differ from those of the first example embodiment described above. Configurations common to the first example embodiment are denoted by the same reference numerals, and detailed description thereof is omitted.

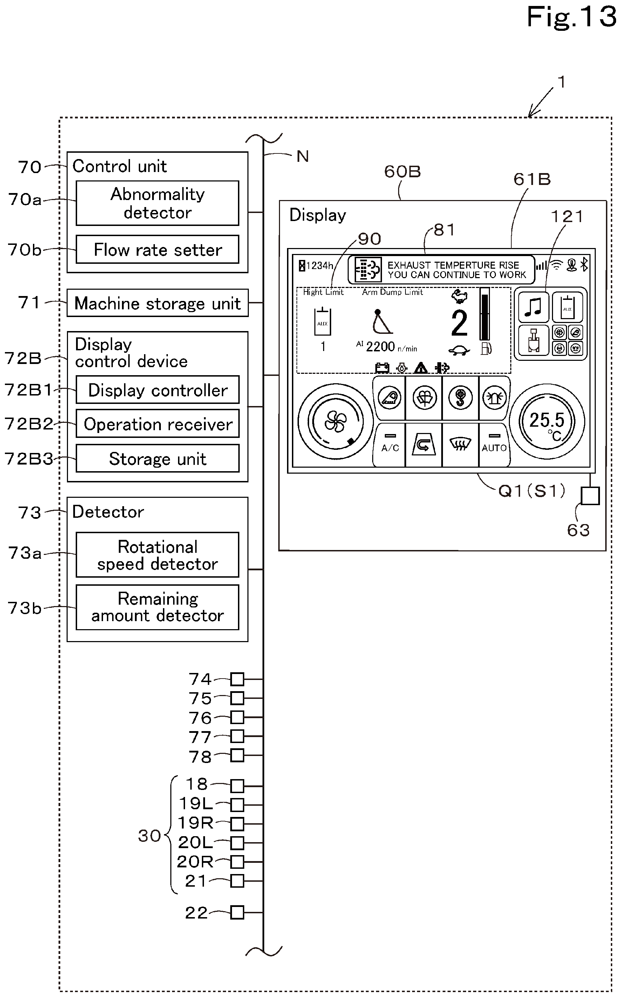

FIG. 13 is a control block diagram according to the second example embodiment. The working machine 1 according to the second example embodiment includes the display 60B (second display 60B) including the display screen 61B, and the display control apparatus 72B (controller 72B1, event handler 72B2, storage unit 72B3) that controls display of the display 60B.

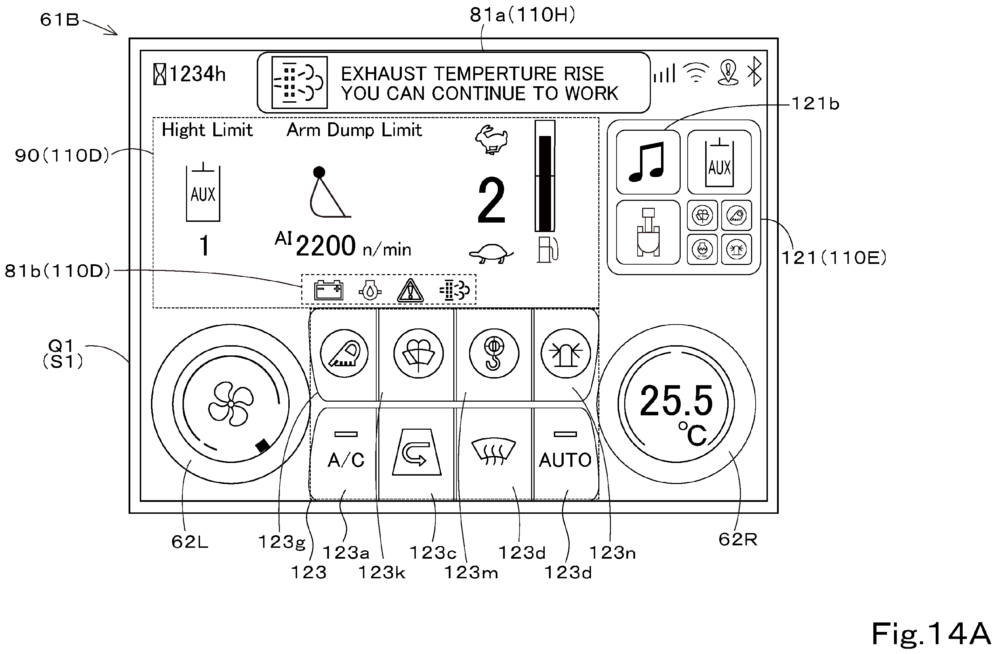

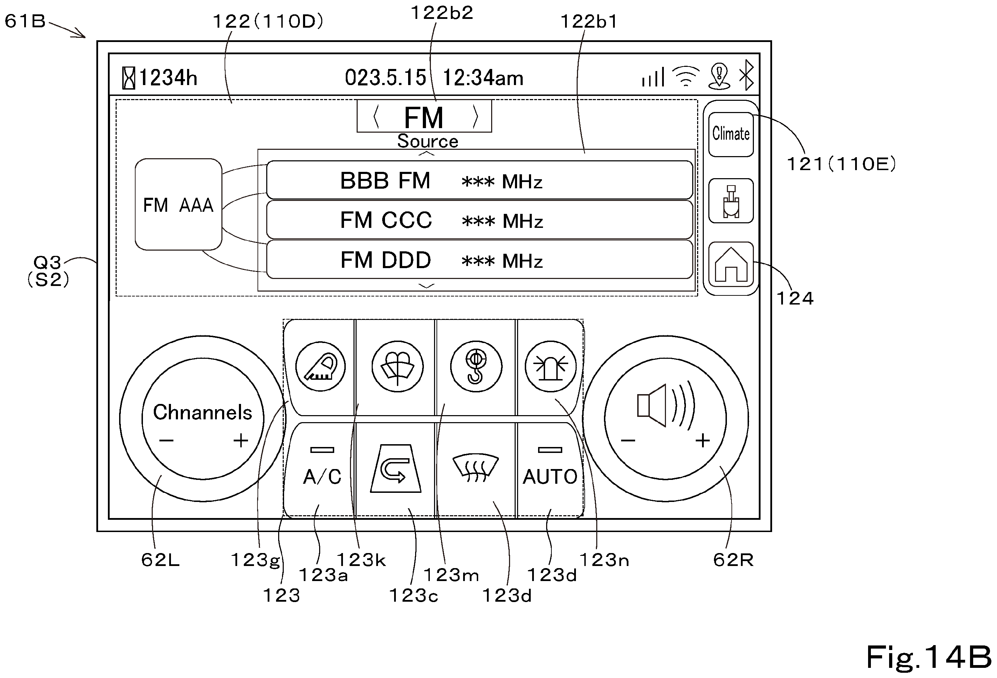

The controller 72B1 is capable of causing the display screen 61B to transition from the first display state S1 to the second display state S2. For example, when the controller 72B1 causes the home screen Q1 in the first display state S1 to be displayed on the display screen 61B (FIG. 14A), if the operator U1 operates the application icon 121b of the first operation portion 121, the controller 72B1 causes the display screen 61B to transition from the first display state S1 to the second setting screen Q3 (FIG. 14B) in the second display state S2.

The controller 72B1 is capable of causing the display screen 61B to transition from the second display state S2 to the first display state S1. For example, when the controller 72B1 causes the second setting screen Q3 in the second display state S2 to be displayed (FIG. 14B), if the operator U1 operates the fourth operation portion 124, the controller 72B1 causes the display screen 61B to transition from the second display state S2 to the home screen Q1 (FIG. 14A) in the first display state S1.

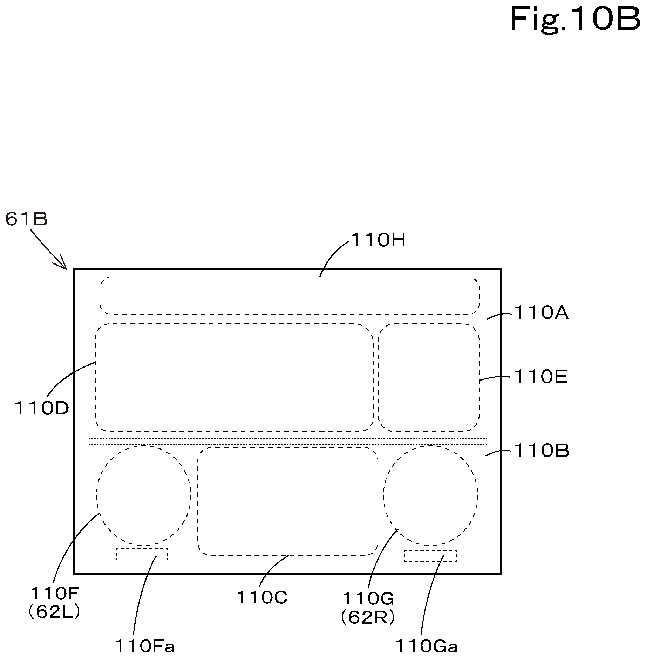

As illustrated in FIGS. 14A and 10B, in the first display state S1, the controller 72B1 causes the first operation portion 121 to be displayed in the first display region 110E, and causes the state information 90 of the working machine 1 to be displayed in the second display region 110D.

In the first display region 110E of the display screen 61B, multiple application icons for receiving selection of a to-be-operated application are arranged side by side. In the second display region 110D, the state information 90 indicating the state of the working machine 1 is provided. Note that the application icons need not be of the same size. For example, application icons that are used relatively frequently may be displayed larger than those used less frequently.

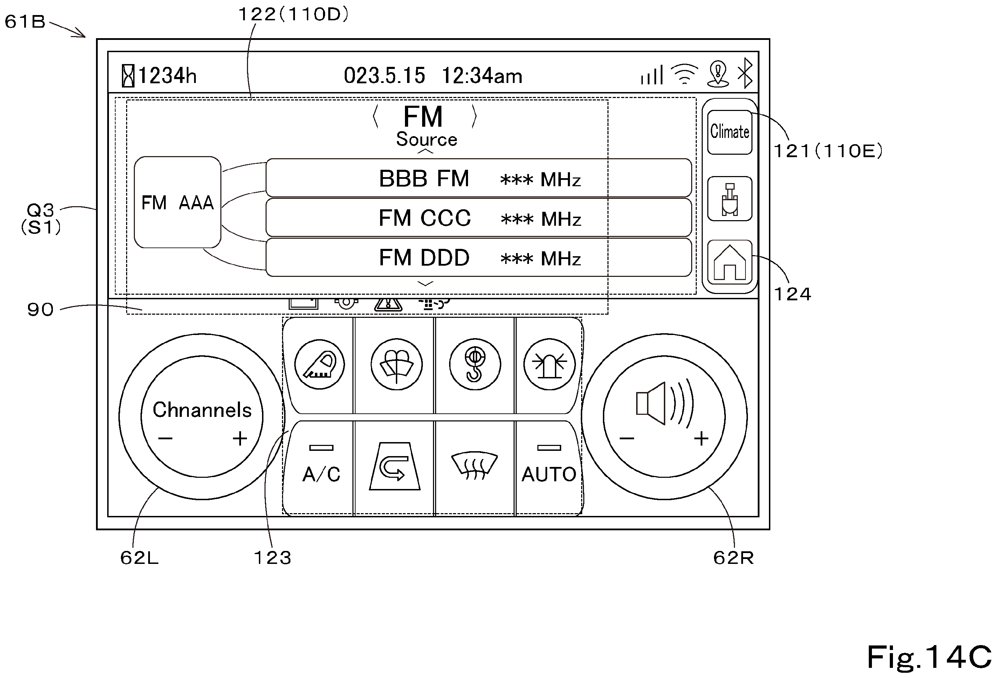

As illustrated in FIG. 14C, in the second display state S2, the controller 72B1 causes the first operation portion 121 to be displayed in the first display region 110E, and causes the second operation portion 122 to be displayed in the second display region 110D so as to overlap the state information 90 of the working machine 1 in the first display state S1. For example, the controller 72B1 continues to display the state information 90 and causes the second operation portion 122 to be displayed. Alternatively, the controller 72B1 may cause the second operation portion 122 that has been subjected to transparency processing (making the background portion transparent) to be displayed in the second display region 110D.

As illustrated in FIGS. 14A and 10B, when a warning condition occurs in the working machine 1, the controller 72B1 causes the warning information 81 (message image 81a) relating to the warning condition to be displayed in a fourth display region 110H, which is a region above the operation actuators 62. Note that the warning information 81 may be provided at a position overlapping the first display region 110E and the second display region 110D. As illustrated in FIG. 14A, the controller 72B1 causes the icon image 81b indicating the type of abnormality to be displayed in the second display region 110D.

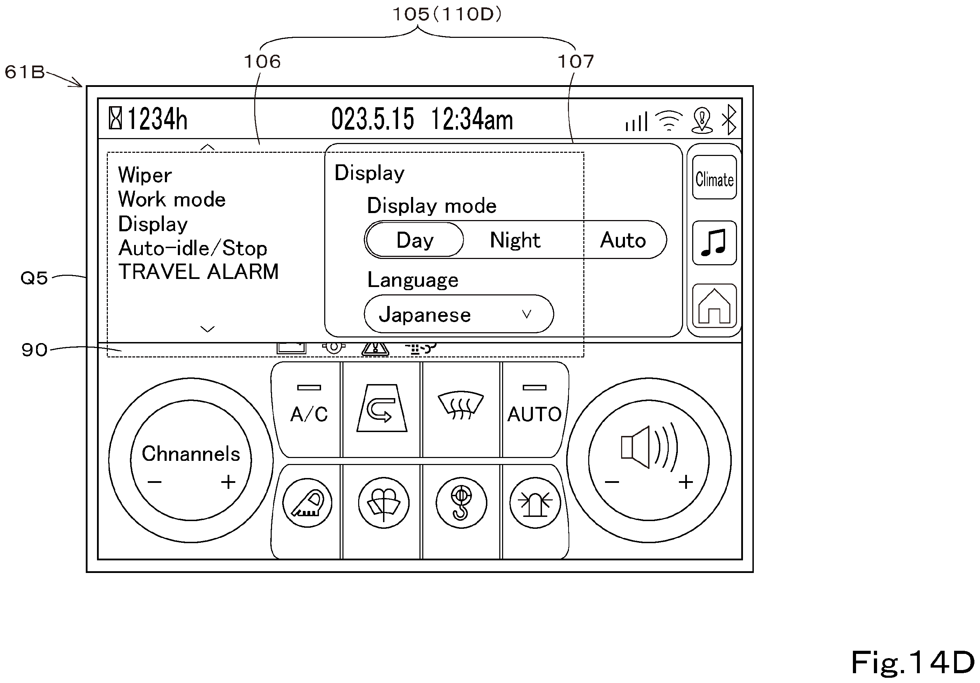

Further, the display control apparatus 72B may cause the setting operation portion 105, which receives input of setting information of the working machine 1 in the first example embodiment, to be positioned on the display screen 61B. The controller 72B1 causes the second switching operation portion 104, which selects display of the setting operation portion 105, to be displayed as the first operation portion 121 in the display region 110E. As illustrated in FIG. 14D, when the operator U1 operates the second switching operation portion 104, the controller 72B1 causes a setting operation screen Q5 to be displayed on the display screen 61B. The controller 72B1 causes the setting operation portion 105, which is capable of inputting setting information of the working machine 1, to be displayed. The event handler 72B2 receives the setting information. The controller 72B1 causes the setting operation portion 105, which receives input of the setting information of the working machine 1, to be displayed in the second display region 110D. The controller 72B1 may continue to display the state information 90 or the second operation portion 122, and cause the setting operation portion 105 to be displayed so as to overlap them.

Note that it is sufficient for the first display region 110E and the second display region 110D to be included in the second upper region 110A different from regions where the operation actuators 62 are provided, and the ratio of the areas of the first display region 110E and the second display region 110D may differ between the second display state S2 and the first display state S1. As illustrated in FIGS. 14A and 14B, the first display region 110E in the second display state S2, in which the first operation portion 121 is positioned, is narrower than the first display region 110E in the first display state S1. Further, the second display region 110D in the second display state S2, in which the second operation portion 122 is positioned, is wider than the second display region 110D in the first display state S1, in which the state information 90 is positioned.

In the case of transitioning from the second display state S2 to the first display state S1, the controller 72B1 narrows the second display region 110D in which the state information 90 is positioned, and enlarges the first display region 110E in which the first operation portion 121 is positioned. In the case of transitioning from the first display state S1 to the second display state S2, the controller 72B1 enlarges the second display region 110D in which the second operation portion 122 is positioned, and narrows the first display region 110E in which the first operation portion 121 is positioned.

Example embodiments of the present invention provide first displays 60A, second displays 60B, first display control apparatuses 72A, second display control apparatuses 72B, working machines 1, programs, and storage media thereof, which are described in the following items.

(Item A1) A working machine 1 including: a first display 60A to display information relating to the working machine 1; and a second display 60B to display an operation portion 120 for an operation input for one or more devices X provided in or on the working machine 1 and receive the operation input to the operation portion 120, wherein the second display 60B and the first display 60A are arranged adjacent to each other.

According to the working machine 1 according to item A1, since an operation can be performed on the operation portion 120 displayed on the second display 60B located adjacent to the first display 60A, gaze shifts during operation can be reduced, thus improving convenience for the operator U1. It is possible to reduce gaze shifts in the case where the operator U1 checks information on the first display 60A while operating the operation portion 120 on the second display 60B at hand, thus alleviating the operational burden on the operator U1. By separating the first display 60A mainly for displaying information from the second display 60B mainly displaying the operation portion 120 for performing operations, the displayable area is increased, allowing a larger amount of information to be displayed. Further, the operator U1 can intuitively grasp which is information relating to the working machine 1 and which is an interface for performing operations.

(Item A2) The working machine 1 according to item A1, wherein the first display 60A is configured to display state information 90 indicating a state of the working machine 1 as the information relating to the working machine 1. According to the working machine 1 of item A2, by displaying information that may vary depending on operations in the vicinity of the second display 60B on which the operator U1 is performing operations, the operator U1 can easily grasp changes in the state of the working machine 1 caused by the operator's own operations without having to shift the operator's gaze.

(Item A3) The working machine 1 according to item A2, wherein the first display 60A is configured to display, as the information relating to the working machine 1, the state information 90, and environmental information 100 indicating surrounding environment of the working machine 1 and/or guidance information 101 for the working machine 1. According to the working machine 1 of item A3, when visually monitoring from the operator's seat 6 while checking the surrounding conditions of the working machine 1 and the guidance information 101 for the working machine 1, gaze shifts are reduced, thus alleviating the operational burden on the operator U1.

(Item A4) The working machine 1 according to item A1, wherein the second display 60B is configured to display, as the operation portion 120, the operation portion 120 for an operation input for at least one device X selected from an air conditioner 74, an audio device 75, a lighting apparatus 30, a rotary beacon 22, a locking device 78, a wiper system 76, and a defogger 77. According to the working machine 1 of item A4, the operator U1 can perform an operation for at least one device X selected from the air conditioner 74, the audio device 75, the lighting apparatus 30, the rotary beacon 22, the locking device 78, the wiper system 76, and the defogger 77 by operating the second display 60B.

(Item A5) The working machine 1 according to any one of items A1 to A4, wherein the second display 60B is provided with a physical operation actuator 62 protruding from the second display 60B to receive an operation input. According to the working machine 1 of item A5, the operator U1 can intuitively grasp that the operator is performing an operation and that the second display 60B is receiving the operation.

(Item A6) The working machine 1 according to item A5, wherein the second display 60B is configured to receive operation inputs for a plurality of devices X, and an operation target of the operation actuator 62 is selectively switchable between the plurality of devices X. According to the working machine 1 of item A6, the operator U1 can perform operation inputs for different operation targets (devices) using the operation actuator 62.

(Item A7) The working machine 1 according to item A6, wherein the second display 60B is configured to display, as the operation portion 120, images indicating a plurality of devices X in a region different from a region where the operation actuator 62 is provided, and select, as the operation target of the operation actuator 62, a device X corresponding to an image selected by an operation input. According to the working machine 1 of item A7, the operator U1 can perform, using the operation actuator 62, an operation input for a device selected by operating the operation portion 120.

(Item A8) The working machine 1 according to any one of items A5 to A7, wherein the operation actuator 62 is a dial including a cylindrical shape and provided to be rotatable in a circumferential direction, and the second display 60B is configured to receive, as an operation input, a rotation direction and an operation amount of the dial. According to the working machine 1 of item A8, the operator U1 can perform an operation input by rotating the operation actuator 62.

(Item A9) The working machine 1 according to item A8, wherein the second display 60B is configured to receive operation inputs for a plurality of devices X, an operation target of the operation actuator 62 is selectively switchable between the plurality of devices X, and the second display 60B is configured to display, inside the cylindrical shape, an image indicating the operation target of the operation actuator 62. According to the working machine 1 of item A9, it is possible to enable the operator U1 to recognize the operation target of the operation actuator 62.

(Item A10) The working machine 1 according to item A9, wherein a plurality of the operation actuators 62 are provided within a display screen 61B of the second display 60B. According to the working machine 1 of item A10, operation targets can be assigned to the plurality of operation actuators 62, enabling the second display 60B to receive more operation inputs. Accordingly, the operator U1 can operate various devices X on the same display screen 61B.

(Item A11) The working machine 1 according to item A1, wherein a dimension in a vertical direction of the first display 60A is longer than a dimension in a vertical direction of the second display 60B. According to the working machine 1 of item A11, the first display 60A can be emphasized by making the dimension in the vertical direction of the first display 60A longer than the dimension in the vertical direction of the second display 60B. That is, it is possible to enable the operator U1 to recognize the first display 60A as a main screen for displaying information, and the second display 60B as an auxiliary screen mainly having a function for receiving operations.

(Item A12) The working machine 1 according to item A11, wherein the first display 60A includes a vertically-elongated rectangular shape, and the second display 60B includes a laterally-elongated rectangular shape. According to the working machine 1 of item A12, the operator U1 can perform a wide range of operations on the second display 60B merely by moving the operator's wrist in a horizontal direction without extending the operator's arm, while the first display 60A is vertically-elongated and adjacent to the second display 60B which receives operations, and is located along the line of sight of the operator U1, thus improving visibility and enabling display of more information.

(Item A13) The working machine 1 according to item A12, wherein a dimension of a side of the second display 60B adjacent to the first display 60A is equal to or substantially equal to a dimension of a side of the first display 60A adjacent to the second display 60B. According to the working machine 1 of item A13, a range of lateral movement of the wrist of the operator U1 becomes substantially equal between the first display 60A and the second display 60B, thus alleviating the operational burden.

(Item A14) The working machine 1 according to item A1, wherein the first display 60A includes a function of receiving an operation input through a touch operation on the first display 60A, and the second display 60B includes a function of receiving an operation input through a touch operation on the second display 60B. According to the working machine 1 of item A14, the operability of the first display 60A and the second display 60B is improved.

(Item A15) The working machine 1 according to item A1, further including a manipulator 12 provided around the operator's seat 6 to receive operations, wherein the first display 60A and the second display 60B are provided forward of the manipulator 12. According to the working machine 1 of item A15, since the first display 60A and the second display 60B are positioned forward of the manipulator 12 such as a lever, the first display 60A, the second display 60B, and the manipulator 12 can be arranged close to one another, thus reducing a region in which the operator U1 moves the operator's hands and arms to operate the working machine 1. Accordingly, the operational burden on the operator U1 can be alleviated, and the operability of the working machine 1 can be improved.

(Item B1) A display control apparatus (second display control apparatus) 72B including a display controller (second display controller) 72B1 configured or programmed to control a display operation on a display (second display) 60B provided in or on a working machine 1, wherein the display controller 72B1 is configured or programmed to, when a selection operation to select a to-be-operated application from among a plurality of applications has not been performed, cause a first operation portion 121 for the selection operation to be displayed as a first display state S1 on a display screen (second display screen) 61B of the display 6B and, when the selection operation has been performed, cause a second operation portion 122 to operate the selected application and the first operation portion 121 to be displayed as a second display state S2 on the display screen 61B.

According to the display control apparatus 72B of item B1, the first operation portion 121 for performing a selection operation to select an application is displayed on the display 60B both when a selection operation to select a to-be-operated application has not been performed and when such a selection operation has been performed. Accordingly, an operation to select an application can be easily performed regardless of the display state at that time, and the operability of the display 60B of the working machine 1 can be improved.

(Item B2) The display control apparatus 72B according to item B1, wherein the display controller 72B1 is configured or programmed to cause the first operation portion 121 for a selection operation to select an application other than an application corresponding to the second operation portion 122 among the plurality of applications to be displayed in the second display state S2. According to the display control apparatus 72B of item B2, in the second display state S2 (application operation state) after a selection operation to select an application has been performed, the screen can be switched to a screen for operating another application by the operator U1 operating the first operation portion 121. Accordingly, the operator U1 can select a desired application without performing multiple screen transition operations, thus alleviating the operational burden.

(Item B3) The display control apparatus according to item B1 or B2, wherein the display controller 72B1 is configured or programmed to cause, in addition to the first operation portion 121 and the second operation portion 122, a third operation portion 123 to operate an application different from the application corresponding to the second operation portion 122 to be displayed in the second display state S2. According to the display control apparatus 72B of item B3, a function different from an application operable by the second operation portion 122 can be operated. Accordingly, in order to execute the function, the operator U1 can perform an operation to execute the function without having to perform a selection operation to select the application, thus alleviating the operational burden on the operator U1.

(Item B4) The display control apparatus 72B according to item B1, wherein the display controller 72B1 is configured or programmed to cause a plurality of function operation members (122a1, 122a2, 122b1, 122b2, 122c1, 122c2) to respectively operate a plurality of functions of the selected application to be displayed as the second operation portion 122. According to the display control apparatus 72B of item B4, the operator U1 can operate, in parallel, multiple functions included in an application selected via the first operation portion 121.

(Item B5) The display control apparatus 72B according to item B3, wherein the display controller 72B1 is configured or programmed to, when the display controller 72B1 causes a plurality of function operation members (122al, 122a2, 122b1, 122b2, 122c1, 122c2) to respectively operate a plurality of functions of the selected application to be displayed on the second operation portion 122 and causes an operation portion to operate the application to be displayed as the third operation portion 123, cause the operation portion to operate the application to be displayed to enable operation of same functions as in a case where the operation portion to operate the application is displayed as the second operation portion 122.

According to the display control apparatus 72B of item B5, since the second operation portion 122 includes an interface for operating the same function as a one-touch button, the operator U1 can invoke the function by both the second operation portion 122 and the third operation portion 123. Accordingly, the operator U1 can select and operate a desired function in accordance with the operator's own line of sight and the state at hand.

(Item B6) The display control apparatus 72B according to any one of items B1 to B5, wherein the display controller 72B1 is configured or programmed to cause a fourth operation portion124 to be displayed on the display screen 61B in the second display state S2, the fourth operation portion 124 being configured to receive an operation to transition to the first display state S1, and when the fourth operation portion 124 is operated, cause the display screen 61B to transition from the second display state S2 to the first display state S1. According to the display control apparatus 72B of item B6, the screen can be easily switched between a case of operating an application and a case of selecting an application.

(Item B7) A working machine 1 including the display control apparatus 72B according to any one of items B1 to B6, and a display 60B to be controlled as to a display operation by the display control apparatus 72B. According to the working machine 1 of item B7, the working machine 1 that achieves the above-described advantageous effects can be realized.

(Item B8) A program to cause a computer to execute processing of the display controller 72B1 of the display control apparatus 72B according to any one of items B1 to B7. According to the program of item B8, by causing a computer to execute the program, the display control apparatus 72B that achieves the above-described advantageous effects can be realized.

(Item B9) A storage medium storing the program according to item B8 in a computer-readable manner. According to the storage medium of item B9, by causing a computer to read and execute the program from the storage medium, the display control apparatus 72B that achieves the above-described advantageous effects can be realized.

(Item C1) A display control apparatus (first display control apparatus) 72A to control a display operation on a display (first display) 60A provided in or on a working machine 1, including a display controller (controller) 72A1 configured or programmed to cause information relating to the working machine 1 to be displayed on a display screen (first display screen) 61A of the display 60A, wherein the display controller 72A1 is configured or programmed to cause an overhead view image 91 of the working machine 1 as viewed from above, and supplementary information 92 to supplement the overhead view image 91 by indicating a state of one or more devices X of the working machine 1 to be displayed in a lower region 80B of the display screen; 61A and, concurrently, cause environmental information 100 indicating information relating to a surrounding area of the working machine 1 and/or guidance information 101 for the working machine 1 to be displayed in an upper region 80A above the lower region 80B of the display screen 61A.

According to the display control apparatus 72A of item C1, while checking the state of a device X of the working machine 1, the operator U1 can focus on the environmental information 100 and/or the guidance information 101 having relatively high priority, since the upper region 80A is located above the lower region 80B. Further, by displaying the supplementary information 92 together with the overhead view image 91 indicating the working machine 1, the operator U1 can intuitively grasp the state of a device X provided in or on the working machine 1.

(Item C2) The display control apparatus 72A according to item C1, wherein the display controller 72A1 is configured or programmed to cause the supplementary information 92 to be displayed superimposed at a position corresponding to a position on the working machine 1 where a device X corresponding to the supplementary information 92 is provided in the overhead view image 91. According to the display control apparatus 72A of item C2, information indicating the state of a device X can be compactly positioned on the display screen 61A. Further, since the operator U1 can visually recognize both the state of a device X and the position of the device X at the same time, the operator U1 can intuitively grasp the state of each device provided in or on the working machine 1.

(Item C3) The display control apparatus 72A according to item C1, wherein the supplementary information 92 includes at least one of an activation status of a lighting apparatus 30, an activation status of a wiper system 76, an activation status of a defogger 77, an activation status of a rotary beacon 22, and an activation status of a locking device 78. According to the display control apparatus 72A of item C3, the operator U1 can grasp the state of at least one selected from the lighting apparatus 30, the wiper system 76, the defogger 77, the rotary beacon 22, and the locking device 78.

(Item C4) The display control apparatus 72A according to item C1, wherein the display controller is configured or programmed to cause an image (92a to 921) indicating the supplementary information 92 to be displayed superimposed on the overhead view image 91. According to the display control apparatus 72A of item C4, information indicating the state of the machine body 2 can be compactly positioned on the display screen 61A.

(Item C5) The display control apparatus 72A according to item C1, wherein the display screen 61A includes a rectangular shape elongated in an up-down direction, and the upper region 80A is larger than the lower region 80B. According to the display control apparatus 72A of item C5, while checking the state of a device X of the working machine 1, the operator U1 can focus on the environmental information 100 and/or the guidance information 101 having relatively high priority.

(Item C6) The display control apparatus 72A according to item C1 or C2, wherein the display controller 72A1 is configured or programmed to cause first information 93 relating to a machine body 2 of the working machine 1 to be displayed on one side (region 80D) in a width direction of the overhead view image 91 and the supplementary information 92 within the lower region 80B, and cause second information 94 relating to a working device 4 of the working machine 1 to be displayed on another side (region 80E) in the width direction of the overhead view image 91 and the supplementary information 92 within the lower region 80B. According to the display control apparatus 72A of item C6, since information displayed in the lower region 80B is partitioned by the overhead view image 91 for each category of information, the operator U1 can appropriately grasp the information displayed in the lower region 80B.

(Item C7) The display control apparatus 72A according to item C6, wherein the first information 93 includes one or more of a remaining amount of fuel, a state of charge of a battery, a rotational speed of an engine or an electric motor, an activation state of an auto-idle function, and a speed stage state of a traveling device. According to the display control apparatus 72A of item C7, the operator U1 can grasp at least one selected from the remaining amount of fuel, the state of charge of the battery, the rotational speed of the engine or the electric motor, the activation state of the auto-idle function, and the speed stage state of the traveling device 3 by visually recognizing the display 60A.

(Item C8) The display control apparatus 72A according to item 6, wherein the second information 94 includes one or more of a type of an attachment 17 mounted on the working device 4, a setting status regarding an operation limit on the working device 4, and a flow rate setting status of hydraulic fluid supplied to the working device 4. According to the display control apparatus 72A of item C8, the operator U1 can grasp at least one selected from the type of the attachment 17, the setting status regarding an operation limit on the working device 4, and the flow rate setting status of hydraulic fluid supplied to the working device 4 by visually recognizing the display 60A.

(Item C9) The display control apparatus 72A according to any one of items C1 to C8, wherein the display controller 72A1 is configured or programmed to, in a case where a warning condition has occurred in the working machine 1, cause warning information 81 regarding the warning condition to be displayed between the lower region 80B and the upper region 80A or in the lower region 80B. According to the display control apparatus 72A of item C4, since the warning information 81 is displayed along the line of sight of the operator U1 who shifts the gaze between the lower region 80B and the upper region 80A, the visibility of the warning information 81 can be improved.

(Item C10) The display control apparatus 72A according to any one of items C1 to C9, wherein the display controller 72A1 is configured or programmed to cause the environmental information 100 to be displayed in the upper region 80A, and cause a captured image 102 acquired by an imager 26 provided in or on the working machine 1 to be displayed as the environmental information 100. According to the display control apparatus 72A of item C5, since the overhead view image 91 of the working machine 1 is displayed near the upper region 80A in which the captured image 102 is displayed, the operator U1 can accurately recognize the state of the working machine 1 based on the overhead view image 91 and the captured image 102.

(Item C11) The display control apparatus 72A according to any one of items C1 to C10, wherein the display controller 72A1 is configured or programmed to cause a first switching operation portion 103 to be displayed, the first switching operation portion 103 being configured to receive an operation to switch display of a plurality of captured images 102 acquired by a plurality of imagers 26 provided in or on the working machine1, and the first switching operation portion 103 is displayed at an upper portion of the upper region 80A. According to the display control apparatus 72A of item C11, by displaying, in the upper region 80A in which the captured image 102 is displayed, the first switching operation portion 103 for switching the imager 26, the operator U1 can intuitively understand that the first switching operation portion 103 has a function for switching the imager 26 and can operate it.

(Item C12) The display control apparatus 72A according to any one of items C1 to C12, wherein the display controller 72A1 is configured or programmed to cause a setting operation portion 105 to receive input of setting information of the working machine 1 to be displayed in the upper region 80A instead of the environmental information 100 and/or guidance information 101 for the working machine 1, and cause a second switching operation portion 104 to be displayed in the upper region 80A, the second switching operation portion 104 being configured to receive a switching operation between displaying the environmental information 100 and/or the guidance information 101 for the working machine 1 and displaying the setting operation portion 105. According to the display control apparatus 72A of item C12, by displaying the setting operation portion 105 requiring a detailed input operation in the upper region 80A, which is a large region at an upper portion of the display screen 61A, the operator U1 can easily perform an input.

(Item C13) The display control apparatus 72A according to any one of items C1 to C12, wherein a touch operation on the supplementary information 92 displayed on the display screen 91A enables an operation input to a device corresponding to the supplementary information 92. According to the display control apparatus 72A of item C13, the operator U1 can easily perform an operation for the device indicated by the supplementary information 92.

(Item C14) The display control apparatus 72A according to any one of items C1 to C13, wherein a touch operation on the setting operation portion 105 displayed on the display screen 61A enables an operation input of the setting information corresponding to the setting operation portion 105. According to the display control apparatus 72A of item C13, the operator U1 can easily perform an operation input of setting information.

(Item C15) A working machine 1 including the display control apparatus 72A according to any one of items C1 to C14, and a display 90A to be controlled as to a display operation by the display control apparatus 72A. According to the working machine 1 of item C15, the working machine 1 that achieves the above-described advantageous effects can be realized.

(Item C16) The working machine 1 according to item C15, further including an operation device 60B positioned below the display 60A and configured to receive an operation of the working machine 1. According to the working machine 1 of item C15, gaze shifts between the display 60A and the operation device 60B are reduced, thus improving operability.

(Item C 17) A program to cause a computer to execute processing of the display controller 72A1 of the display control apparatus 72A according to any one of items C1 to C14. According to the program of item C17, by causing a computer to execute the program, the display control apparatus 72A that achieves the above-described advantageous effects can be realized.

(Item C18) A storage medium storing the program according to item C17 in a computer-readable manner. According to the storage medium of item C18, by causing a computer to read and execute the program from the storage medium, the display control apparatus 72A that achieves the above-described advantageous effects can be realized.

(Item D1) A working machine 1 including a first display 60A and a second display 60B arranged adjacent to each other, wherein: the first display 60A includes a first display screen 61A to display information relating to the working machine 1, and a first display controller (controller) 72A1 to control a display operation of the first display screen 61A; and the second display 60B includes a second display screen 61B to display information relating to one or more devices X provided in or on the working machine 1, a second display controller (controller) 72B1 to control a display operation of the second display screen 61B, and an operation receiver (event handler) 72B2 to receive an operation input relating to the one or more devices X.

According to the working machine 1 of item D1, since the operator U1 can perform an operation for one or more devices X provided in or on the working machine 1 using the second display 60B located adjacent to the first display 60A, the operator U1 need not greatly move the operator's gaze when operating the device(s) X, thus improving the operability for the operator U1.

(Item D2) The working machine 1 according to item D1, further including a physical operation actuator 62 provided on the second display screen 61B to protrude from the second display screen 61B, wherein the operation receiver 72B2 is configured to receive an operation on the operation actuator 62 as an operation input. According to the working machine 1 of item D2, the operator U1 can intuitively grasp both that the operator U1 is performing an operation and that the second display 60B is receiving the operation, thus improving the operability of the working machine 1.

(Item D3) The working machine 1 according to item D1 or D2, wherein the operation receiver 72B2 is configured to receive a touch operation on the second display screen 61B as an operation input. According to the working machine 1 of item D3, the operator U1 can easily perform operations for various devices X by touch-operating the second display screen 61B, thus improving the operability of the working machine 1.

(Item D4) The working machine 1 according to item D2, wherein the second display controller 72B1 is configured or programmed to cause an operation portion 120 for a selection operation to select, from among a plurality of devices X, a device X serving as an operation target of the operation actuator 62, to be displayed on the second display screen 61B, and the operation receiver 72B2 is configured to receive an operation input on the operation portion 120 and change the operation target of the operation actuator 62 according to the selected device X on the operation portion 120. According to the working machine 1 of item D4, the operator U1 can perform various operations using the operation actuator 62 according to the selected device X selected on the operation portion 120. Therefore, the versatility of the operation actuator 62 can be improved.

(Item D5) The working machine 1 according to item D4, wherein the second display controller 72B1 is configured or programmed to change display in the vicinity of the operation actuator 62 on the second display screen 61B according to the selected device X. According to the working machine 1 of item D5, the operator U1 can grasp the operation target of the operation actuator 62, thus not only improving the versatility of the operation actuator 62 but also improving its operability.

(Item D6) The working machine 1 according to any one of items D2 to D5, wherein the operation actuator 62 is a dial including a cylindrical shape and provided to be rotatable in a circumferential direction. According to the working machine 1 of item D6, the amount of operation can be adjusted by rotating the dial, and therefore adjustment of operations for the device X can be performed continuously or in multiple stages.

(Item D7) The working machine 1 according to item D5, wherein the operation actuator 62 is a dial including a cylindrical shape and provided to be rotatable in a circumferential direction, and the second display controller 72B1 is configured or programmed to change display of first images 62L1 and 62R1 indicating the operation target of the operation actuator 62, positioned inside the cylindrical shape of the operation actuator 62, on the second display screen 61B according to the selected device X. According to the working machine 1 of item D7, the operator U1 not only can perform operations for the device X continuously or in multiple stages, but also can easily grasp the operation target of the operation actuator 62 by visually recognizing the operation actuator 62, thus improving the operability of the working machine 1.

(Item D8) The working machine 1 according to item D5, wherein the second display controller 72B1 is configured or programmed to change display of first images 62L2 and 62R2 in the vicinity of the operation actuator 62 according to the selected device X. According to the working machine 1 of item D8, the operator U1 not only can perform operations for the device X continuously or in multiple stages, but also can easily grasp the operation target of the operation actuator 62 by visually recognizing the vicinity of the operation actuator 62, thus improving the operability of the working machine 1.

(Item D9) The working machine 1 according to item D4, wherein the second display controller 72B1 is configured or programmed to cause one or more second images indicating one or more devices X to be displayed as the operation portion 120 in a region different from a region in which the operation actuator 62 is provided on the second display screen 61B, and the operation receiver 72B2 is configured to select, as the operation target of the operation actuator 62, a device X corresponding to the selected image. According to the working machine 1 of item D9, various operations can be performed using the operation actuator 62 according to the selected device X. Therefore, the versatility of the operation actuator 62 can be improved.

(Item D10) The working machine 1 according to any one of items D2 to D9, including a plurality of the operation actuators 62. According to the working machine 1 of item D10, operation targets can be assigned to the plurality of operation actuators 62, and therefore the second display 60B can receive a larger number of operation inputs. Accordingly, the operator U1 can operate various devices X on the second display screen 61B.

(Item D11) The working machine 1 according to any one of items D2 to D10, wherein the second display 60B includes a vibration element 63, and the operation receiver 72B2 is configured to cause the vibration element 63 to vibrate according to an operation input to the operation actuator 62. According to the working machine 1 of item D11, the operator U1 can easily grasp, through vibration of the vibration element 63, that an operation via the operation actuator 62 has been received.

(Item D12) The working machine 1 according to item D11, wherein the operation receiver 72B2 is configured to select, from among a plurality of devices X, a device X serving as an operation target of the operation actuator 62, and, when an operation input to the operation actuator 62 is performed, cause the vibration element 63 to vibrate in a mode according to the device X selected as the operation target of the operation actuator 62. According to the working machine 1 of item D12, the operator U1 not only can intuitively understand that an operation via the operation actuator 62 has been received, but also can easily grasp, from a difference in the vibration mode of the vibration element 63, for which operation target (device X) the operation has been performed.

(Item D13) The working machine 1 of item D11 or D12, wherein the operation receiver 72B2 is configured to change a vibration frequency or a vibration amplitude of the vibration element 63 according to at least one of an operation speed and an operation amount of an operation on the operation actuator 62. According to the working machine 1 of item D13, the operator U1 not only can intuitively understand that an operation via the operation actuator 62 has been received, but also can grasp the operation amount received by the operation actuator 62 through a difference in vibration of the vibration element 63.

(Item D14) The working machine 1 according to item D12, wherein the operation receiver 72B2 is configured to change a vibration frequency or a vibration amplitude of the vibration element 63 according to a device selected as the operation target of the operation actuator 62. According to the working machine 1 of item D14, the operator U1 not only can intuitively understand that an operation via the operation actuator 62 has been received, but also can easily grasp, through a difference in vibration of the vibration element 63, for which operation target (device X) the operation has been performed.

(Item D15) The working machine 1 according to any one of items D1 to D14, wherein the one or more devices X include one or more of an air conditioner 74, an audio device 75, a lighting apparatus 30, a rotary beacon 22, a wiper system 76, a defogger 77, and a locking device 78. According to the working machine 1 of item D15, the operator U1 can operate one or more of the air conditioner 74, the audio device 75, the lighting apparatus 30, the rotary beacon 22, the wiper system 76, the defogger 77, and the locking device 78 by operating the second display 60B.

(Item D16) The working machine 1 according to any one of items D1 to D15, wherein the first display controller 72A1 is configured or programmed to cause state information 90 indicating a state of the working machine 1, and environmental information 100 indicating information on a surrounding area of the working machine 1 and/or guidance information 101 for the working machine 1 to be displayed on the first display screen 61A. According to the working machine 1 of item D16, it is possible to reduce gaze shifts in the case where the operator U1 checks information displayed on the first display screen 61A while operating the second display 60B at hand, thus alleviating the operational burden on the operator U1.

(Item D 17) A program to cause a computer to execute processing of the first display controller 72A1, the second display controller 72B1, and the operation receiver 72B2 in the working machine 1 according to any one of items D1 to D16. According to the program of item D17, by causing a computer to execute the program, the working machine 1 that achieves the above-described advantageous effects can be realized.

(Item D18) A storage medium storing the program according to item D17 in a computer-readable manner. According to the storage medium of item D18, by causing a computer to read and execute the program from the storage medium, the working machine 1 that achieves the above-described advantageous effects can be realized.

(Item E1) A working machine 1 including a display (second display) 60B, wherein the display 60B includes: a display controller 72B1 configured or programmed to cause information relating to the working machine 1 and an operation portion 120 to perform an operation for one or more devices X provided in or on the working machine 1 to be displayed on a display screen 61B of the display 60B; and an operation receiver 72B2 to receive an operation input to the operation portion 120.

According to the working machine 1 of item E1, since the operator U1 can perform an operation for one or more devices X provided in or on the working machine 1 using the display 60B displaying information relating to the working machine 1, the operator U1 need not greatly shift the operator's gaze while operating the device(s) X, thus improving the operability of the working machine 1.

(Item E2) The working machine 1 according to item E1, further including a physical operation actuator 62 provided on the display screen 61B to protrude from the display screen 61B, wherein the operation receiver 72B2 is configured to receive an operation on the operation actuator 62 as an operation input. According to the working machine 1 of item E2, the operator U1 can intuitively grasp both that the operator U1 is performing an operation and that the display 60B is receiving the operation, thus improving the operability of the working machine 1.

(Item E3) The working machine 1 according to item E1 or E2, wherein the operation receiver 72B2 is configured to receive a touch operation on the display screen 61B as the operation input. According to the working machine 1 of item E3, the operator U1 can easily perform operations for various devices X by touch-operating the display screen 61B, thus improving the operability of the working machine 1.

(Item E4) The working machine 1 according to item E2, wherein the display controller 72B1 is configured or programmed to cause the operation portion 120 to be displayed on the display screen 61B, the operation portion 120 being for a selection operation to select, from among a plurality of devices X, a device X serving as an operation target of the operation actuator 62, and the operation receiver 72B2 is configured to receive an operation input to the operation portion 120 and change the operation target of the operation actuator 62 according to the device X selected via the operation portion 120. According to the working machine 1 of item E4, the operator U1 can perform various operations using the operation actuator 62 according to the device X selected via the operation portion 120. Therefore, the versatility of the operation actuator 62 can be improved.

(Item E5) The working machine 1 according to item E4, wherein the display controller 72B1 is configured or programmed to change display in the vicinity of the operation actuator 62 on the display screen 61B according to the selected device X. According to the working machine 1 of item E5, the operator U1 can grasp the operation target of the operation actuator 62, thus not only improving the versatility of the operation actuator 62 but also improving its operability.

(Item E6) The working machine 1 according to any one of items E2 to E5, wherein the operation actuator 62 is a dial including a cylindrical shape and provided to be rotatable in a circumferential direction. According to the working machine 1 of item E6, the amount of operation can be adjusted by rotating the dial, and therefore adjustment of operations for the device X can be performed continuously or in multiple stages.

(Item E7) The working machine 1 according to item E5, wherein the operation actuator 62 is a dial including a cylindrical shape and provided to be rotatable in a circumferential direction, and the display controller 72B1 is configured or programmed to change display of first images 62L1 and 62R1 indicating the operation target of the operation actuator 62, positioned inside the cylindrical shape of the operation actuator 62, on the second display screen 61B according to the selected device X. According to the working machine 1 of item E7, the operator U1 not only can perform operations for the device X continuously or in multiple stages, but also can easily grasp the operation target of the operation actuator 62 by visually recognizing the operation actuator 62, thus improving the operability of the working machine 1.

(Item E8) The working machine 1 according to item E5, wherein the display controller 72B1 is configured or programmed to change display of first images 62L2 and 62R2 indicating the operation target of the operation actuator 62, positioned in the vicinity of the operation actuator 62, according to the selected device X. According to the working machine 1 of item E8, the operator U1 not only can perform operations for the device X continuously or in multiple stages, but also can easily grasp the operation target of the operation actuator 62 by visually recognizing the vicinity of the operation actuator 62, thus improving the operability of the working machine 1.

(Item E9) The working machine 1 according to item E4, wherein the display controller 72B1 is configured or programmed to cause one or more second images indicating one or more devices X to be displayed as the operation portion 120 in a region different from a region in which the operation actuator 62 is provided on the display screen 61B, and the operation receiver 72B2 is configured to select, as the operation target of the operation actuator 62, a device X corresponding to the selected image. According to the working machine 1 of item E9, various operations can be performed using the operation actuator 62 according to the selected device X. Therefore, the versatility of the operation actuator 62 can be improved.

(Item E10) The working machine 1 according to any one of items E2 to E9, including a plurality of the operation actuators 62. According to the working machine 1 of item E10, operation targets can be assigned to the plurality of operation actuators 62, and therefore the display 60B can receive a larger number of operation inputs. Accordingly, the operator U1 can operate various devices X on the display screen 61B.

(Item E11) The working machine 1 according to any one of items E2 to E10, wherein the display 60B includes a vibration element 63, and the operation receiver 72B2 is configured to cause the vibration element 63 to vibrate according to an operation input to the operation actuator 62. According to the working machine 1 of item E11, the operator U1 can easily grasp, through vibration of the vibration element 63, that an operation via the operation actuator 62 has been received.

(Item E12) The working machine 1 according to item E11, wherein the operation receiver 72B2 is configured to select, from among a plurality of devices X, a device X serving as an operation target of the operation actuator 62, and, when an operation input to the operation actuator 62 is performed, cause the vibration element 63 to vibrate in a mode according to the device X selected as the operation target of the operation actuator 62. According to the working machine 1 of item E12, the operator U1 not only can intuitively understand that an operation via the operation actuator 62 has been received, but also can easily grasp, from a difference in the vibration mode of the vibration element 63, for which operation target (device X) the operation has been performed.

(Item E13) The working machine 1 according to item E11 or, wherein the operation receiver 72B2 is configured to change a vibration frequency or a vibration amplitude of the vibration element 63 according to at least one of an operation speed and an operation amount of an operation on the operation actuator 62. According to the working machine 1 of item E13, the operator U1 not only can intuitively understand that an operation via the operation actuator 62 has been received, but also can grasp the operation amount received by the operation actuator 62 through a difference in vibration of the vibration element 63.

(Item E14) The working machine 1 according to item E12, wherein the operation receiver 72B2 is configured to change a vibration frequency or a vibration amplitude of the vibration element 63 according to a device selected as the operation target of the operation actuator 62. According to the working machine 1 of item E14, the operator U1 not only can intuitively understand that an operation via the operation actuator 62 has been received, but also can easily grasp, through a difference in vibration of the vibration element 63, for which operation target (device X) the operation has been performed.

(Item E15) The working machine 1 according to any one of items E1 to E14, wherein the one or more devices X include one or more of an air conditioner 74, an audio device 75, a lighting apparatus 30, a rotary beacon 22, a wiper system 76, a defogger 77, and a locking device 78. According to the working machine 1 of item E15, the operator U1 can operate one or more of the air conditioner 74, the audio device 75, the lighting apparatus 30, the rotary beacon 22, the wiper system 76, the defogger 77, and the locking device 78 by operating the second display 60B.

(Item E16) A program to cause a computer to execute processing of the display controller 72B1 and the operation receiver 72B2 in the working machine 1 according to any one of items E1 to E15. According to the program of item E16, by causing a computer to execute the program, the working machine 1 that achieves the above-described advantageous effects can be realized.

(Item E17) A storage medium storing the program according to item E16 in a computer-readable manner. According to the storage medium of item E17, by causing a computer to read and execute the program from the storage medium, the working machine 1 that achieves the above-described advantageous effects can be realized.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

1 working machine
60B display (second display)
61B display screen (second display screen)
72B display control apparatus (second display control apparatus)
72B1 display controller (controller)
120 operation portion
121 first operation portion
122 second operation portion
122a1, 122a2 function operation members
122b1, 122b2 function operation members
122c1, 122c2 function operation members
123 third operation portion
124 fourth operation portion
S1 first display state
S2 second display state

## Claims

1. A display control apparatus comprising a display controller configured or programmed to control a display operation on a display provided in or on a working machine, wherein
the display controller is configured or programmed to, when a selection operation to select a to-be-operated application from among a plurality of applications has not been performed, cause a first operation portion for the selection operation to be displayed as a first display state on a display screen of the display, and, when the selection operation has been performed, cause a second operation portion to operate the selected application and the first operation portion to be displayed as a second display state on the display screen.

2. The display control apparatus according to claim 1, wherein the display controller is configured or programmed to cause the first operation portion for a selection operation to select an application other than an application corresponding to the second operation portion among the plurality of applications to be displayed in the second display state.

3. The display control apparatus according to claim 1, wherein the display controller is configured or programmed to cause, in addition to the first operation portion and the second operation portion, a third operation portion to operate an application different from the application corresponding to the second operation portion to be displayed in the second display state.

4. The display control apparatus according to claim 1, wherein the display controller is configured or programmed to cause a plurality of function operation members to respectively operate a plurality of functions of the selected application to be displayed as the second operation portion.

5. The display control apparatus according to claim 3, wherein the display controller is configured or programmed to, when the display controller causes a plurality of function operation members to respectively operate a plurality of functions of the selected application to be displayed on the second operation portion and causes an operation portion to operate the application to be displayed as the third operation portion, cause the operation portion to operate the application to be displayed to enable operation of same functions as in a case where the operation portion to operate the application is displayed as the second operation portion.

6. The display control apparatus according to claim 1, wherein:
the display controller is configured or programmed to:
cause a fourth operation portion to be displayed on the display screen in the second display state, the fourth operation portion being configured to receive an operation to transition to the first display state; and
when the fourth operation portion is operated, cause the display screen to transition from the second display state to the first display state.

7. A working machine comprising:
the display control apparatus according to any one of claims 1 to 6; and
a display to be controlled as to a display operation by the display control apparatus.

8. A program to cause a computer to execute processing of the display controller of the display control apparatus according to any one of claims 1 to 6.

9. A storage medium storing the program according to claim 8 in a computer-readable manner.
